# EUROPÄISCHE PATENTSCHRIFT

(11) **EP 3 994 087 B1**
(45) Veröffentlichungstag und Bekanntmachung des Hinweises auf die Patenterteilung: **03.05.2023**
(21) Anmeldenummer: 20796510.4
(22) Anmeldetag: 15.10.2020
(51) Int. Cl.: B65H 29/04, B65H 31/32, B65H 33/00, B65H 31/10, B65H 33/04

(54) **BOGENBEARBEITUNGSMASCHINE MIT ZUMINDEST EINER BOGENABLAGEEINRICHTUNG UND VERFAHREN ZUR BOGENABLAGE**
SHEET PROCESSING MACHINE WITH AT LEAST ONE SHEET STORAGE DEVICE, AND METHOD FOR STORING SHEETS
MACHINE DE TRAITEMENT DE FEUILLES AVEC AU MOINS UN DISPOSITIF DE STOCKAGE DE FEUILLES ET PROCÉDÉ DE STOCKAGE DE FEUILLES

(30) Priorität: 28.10.2019 DE 102019128978
(43) Veröffentlichungstag der Anmeldung: 11.05.2022
(73) Patentinhaber: Koenig & Bauer AG, 97080 Würzburg (DE)
(72) Erfinder: RUHM, Sylvio, 01108 Dresden (DE)
(74) Vertreter: Koenig & Bauer AG
(86) Internationale Anmeldenummer: PCT/EP2020/079034
(87) Internationale Veröffentlichungsnummer: WO 2021/083676

(56) Entgegenhaltungen:
- EP-A1- 2 452 790
- DE-A1- 3 623 077
- ES-A2- 2 064 222
- JP-A- S6 164 662
- JP-U- H0 565 951

## Beschreibung

Die Erfindung betrifft eine Bogenbearbeitungsmaschine mit zumindest einer Bogenablageeinrichtung und ein Verfahren zur Bogenablage gemäß dem Oberbegriff des Anspruches 1 bzw. gemäß dem Oberbegriff des Anspruches 11.

Bei der Herstellung von Verpackungen werden bahn- oder bogenförmige Materialien verwendet. In mehreren Bearbeitungsschritten werden Bogen beispielsweise bedruckt, geprägt, gerillt, perforiert, gestanzt, geschnitten, geheftet, geklebt und beispielsweise zu Verpackungen gefaltet. Zur Optimalen Ausnutzung der Fläche eines Bogens werden in der Regel mehrere gleiche oder unterschiedliche Exemplare, z. B. eines Plakats, einer Faltschachtel oder einer Verpackung, auf einen gemeinsamen Bogen gedruckt und anschließend gestanzt. Diese Exemplare werden als Nutzen bezeichnet.

Eine Bogenbearbeitungsmaschine kann verschiedene Bearbeitungsschritte wie beispielsweise Bedrucken, Schneiden, Prägen, Rillen, Stanzen, Perforieren, Kleben und/oder Heften umfassen. Häufig weisen solche Bogenbearbeitungsmaschinen auch Inspektionseinrichtungen auf. Üblicherweise werden Bogen in Bearbeitungsmaschinen mit formgebundenen Stanz- und Schneideinrichtungen bearbeitet und zurechtgeschnitten.

Eine solche Bearbeitungsmaschine ist beispielsweise als Stanz-, Schneid-, Perforier, Präge- und/oder Rillmaschine ausgebildet. Wenn im Folgenden eine solche Bearbeitungsmaschine als Stanze und/oder Stanzmaschine bezeichnet wird, ist insbesondere auch eine Schneid-, Perforier-, Präge- und/oder Rillmaschine gemeint. Dabei gibt es bei formgebundenen Systemen neben Rotationsstanzen auch Flachstanzen, insbesondere Flachbettstanzen. In diesen werden durch eine sich zyklisch wiederholende Bewegung mehrere Bogen nacheinander bearbeitet. Bevorzugt werden die Bogen mit einem Transportsystem, bevorzugt Kettengreifersystem, weitestgehend horizontal durch die Bearbeitungsmaschine bewegt. Neben einem Stanzaggregat weist eine solche Maschine üblicherweise auch andere Aggregate wie z. B. ein Bogenanlageaggregat, ein Bogenauslageaggregat, ein Ausbrechaggregat, ein Bogeneinlageaggregat, ein Nutzentrennaggregat und ein Reststückauslageaggregat auf.

Im Nutzentrennaggregat werden die Nutzen mittels einem oberen und einem unteren Nutzentrennwerkzeug abgetrennt und auf einem Auslageaggregat gestapelt. Die Nutzen werden in der Regel auf dem Auslagestapel als Einzelstapel gestapelt. Zur Erhöhung der Stabilität der Einzelstapel wird periodisch ein, bevorzugt unbearbeiteter, Bogen in den Stapel und/oder die Einzelstapel eingeführt oder abgelegt. Insbesondere dazu ist das Bogeneinlageaggregat in der Bogenbearbeitungsmaschine angeordnet.

Durch die DE 195 16 023 B4 und die DE 195 16 023 A1 ist eine derartige Vorrichtung zum Stapeln von Bogen und/oder Nutzen bekannt. Insbesondere wird dort eine Zwischenbogenkassette mit einem Vorratsstapel an unbearbeiteten Bogen gezeigt. Weiter ist ein Rechen zum Transport eines solchen Bogens in einen Ablagestapel gezeigt. Insbesondere wird dort ein unbearbeiteter Bogen als Zwischenbogen auf den Auslagestapel gelegt.

Durch die DE 10 2015 218 145 A1 ist eine Bogenablageeinrichtung zum Einschub in einen Bogenstapel als Nonstop-Einrichtung bekannt. Die Bogenablageeinrichtung ist bevorzugt als Rechen, Rollo oder Platte ausgebildet. Insbesondere weist das Rollo mehrere hintereinander angeordneten Glieder, z. B. Walzen, Rohre oder Stangen auf. Stirnseitig sind die Glieder drehbeweglich an den Ketten gelagert.

Die ES 2 064 222 A2 offenbart eine Bogenbearbeitungsmaschine mit einer Bogenablageeinrichtung. Die Bogenablageeinrichtung weist zum Zwischenspeichern von Nutzen/Bogen einen oder zwei Ablagerechen auf. Eine Ausführungsform der Bogenablageeinrichtung als Transportband ist offenbart, allerdings bleibt dessen Ausbildung ohne Erläuterung.

Die EP 2 840 047 A1 offenbart eine Palletiermaschine für verschiedene Materialien wie Wellpappe oder ähnliches. Dabei offenbart die Schrift ein Bogenablagemittel und ein Ablageelement.

Die DE 26 30 094 A1 offenbart eine Bogenbearbeitungsmaschine mit einer Bogenablageeinrichtung. Die DE 26 30 094 A1 beschreibt ein non stop device, welches einen Stapelwechsel erleichtert. Das Bogenablageeinrichtung wird unter dem unteren Nutzentrennwerkzeug angeordnet.

Durch die EP 2 452 790 A1 ist eine Bearbeitungsstation für eine Stanzmaschine und ein Verfahren zur Probebogenentnahme offenbart. Ein Nutzentrennwerk weist ein Oberwerkzeug und ein Unterwerkzeug auf.

Durch die JP S61 64662 A ist eine Bogenauslage einer Rotationsdruckmaschine bekannt. Ein Sensor erkennt die Lager einer Bogenablageeinrichtung 11D3 und mittels des Signals kann diese, vorallem vertikal, gesteuert werden.

Die JP H05 65951 U offenbart eine Bogenablageeinrichtung einer Schneid bzw. Stanzmaschine. DieBogenablageeinrichtung offenbart eine Hauptgabel/Rechen (main fork) sowie eine Hilfsgabel (auxiliary fork ).

Die DE 63 23 077 A1 ist eine Bogenablageeinrichtung mit einem Stabrost und Gleitbändern offenbart. Damit der oder die Bogen, die unmittelbar mit den Stäben in Berührung kommen, beim Herausziehen möglichst wenig belastet werden, sind die Stäbe möglichst gleitfähig oder besitzen ein Gleitband. Die Bänder sind dazu auf Rollen drehbar gelagert Die Stäbe können mittels einer nicht dargestellten Transportvorrichtung ausgefahren werden.

Der Erfindung liegt die Aufgabe zugrunde, eine Bogenbearbeitungsmaschine mit zumindest einer Bogenablageeinrichtung und ein Verfahren zur Bogenablage zu schaffen.

Die Aufgabe wird erfindungsgemäß durch die Merkmale des Anspruches 1 bzw. die Merkmale des Anspruches 11 gelöst.

Die mit der Erfindung erzielbaren Vorteile bestehen insbesondere darin, dass eine verbesserte Bogenablageeinrichtung zur, bevorzugt nonstop, Bogenablage geschaffen wird. Insbesondere sind durch die Ausführung weniger Stillstände und/oder Stopps der Bogenbearbeitungsmaschine notwendig. Insbesondere kann so ein Automatisierungsgrad erhöht und eine Maschinenlaufzeit verlängert werden. Durch eine vertikal verstellbare Anordnung der Bogenablageeinrichtung kann eine Zwischenspeicherkapazität von Bogen erhöht werden. Insbesondere kann eine Zwischenspeicherkapazität beispielsweise so stark erhöht werden, dass ein Auslagestapel ohne Maschinenstillstand gewechselt werden kann.

In einem Ausfahrschritt, insbesondere einem Bogenablageschritt, wird ein Zwischenspeicherstapel von Bogen und/oder Nutzen und/oder Einzelstapel von Nutzen auf einem Stapelelement und/oder Auslagestapel abgelegt. In diesem Ausfahrschritt wird durch eine relative Bewegung zumindest eines Bogenablagemittels und zumindest eines Transportmittels ein Verschieben und/oder Verrutschen zumindest eines Zwischenspeicherstapels verhindert und/oder zumindest verringert.

Ein weiterer mit der Erfindung erzielbarer Vorteil besteht in der Ausführung der Bogenablageeinrichtung mit einer horizontal bewegbaren Bogenablageeinrichtung. Bei der Zwischenbogeneinlage liegt in einem Einfahrschritt bereits ein Bogen auf der Bogenablageeinrichtung. Insbesondere kann dadurch der Zwischenbogeneinlageschritt sowie ein Zwischenspeichern mittels einer Bogenablageeinrichtung realisiert werden. Insbesondere kann eine kompakte Bauweise erreicht werden. Insbesondere kann so auf eine zweite Bogenablageeinrichtung verzichtet werden.

Ein weiterer mit der Erfindung erzielbarer Vorteil besteht in der kompakten Anordnung der Antriebe für das zumindest eine Bogenablagemittel und das zumindest eine Ablageelement. Insbesondere sind diese gestellfest und/oder ortsfest im Bogeneinlageaggregat angeordnet. Insbesondere ist so eine kompaktere Ausgestaltung der Bogenablageeinrichtung möglich. Bei den verschiedenen relativen Bewegungen muss so insbesondere kein Antrieb mitbewegt werden. Insbesondere ist so eine dünne Ausbildung des Bogenablagemittels möglich. Besonders kompakt wird die Ausgestaltung der zumindest einen Bogenablageeinrichtung mit der bevorzugten Ausgestaltung einer Koaxialwelle. Die Antriebe treiben bevorzugt die Koaxialwelle an. Über lineargeführte Führungselemente wird so eine Relativbewegung des zumindest einen Bogenablagemittels und des zumindest einen Ablageelements erreicht.

Ein weiterer mit der Erfindung erzielbarer Vorteil besteht darin, dass durch die Bogenablageeinrichtung ein Werkzeugwechsel, insbesondere eines unteren Nutzentrennwerkzeugs, erleichtert wird, da die Bogenablageeinrichtung von dem Nutzentrennwerkzeug beabstandet anordnenbar ist Mittels einer Hubvorrichtung kann die Bogenablageeinrichtung in der vertikalen Richtung verstellt werden und so ein unteres Nutzentrennwerkzeug an die vorgesehene Position geführt werden.

Ausführungsbeispiele der Erfindung sind in den Zeichnungen dargestellt und werden im Folgenden näher beschrieben.

Es zeigen:

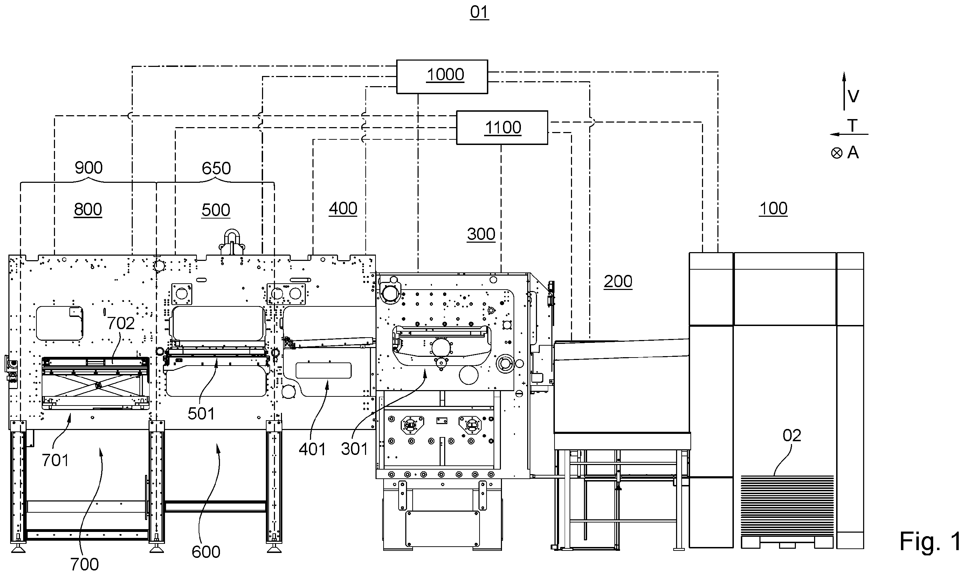

- Fig. 1: eine Darstellung einer Bogenbearbeitungsmaschine in einer bevorzugten Ausführungsform in einer Seitenansicht;

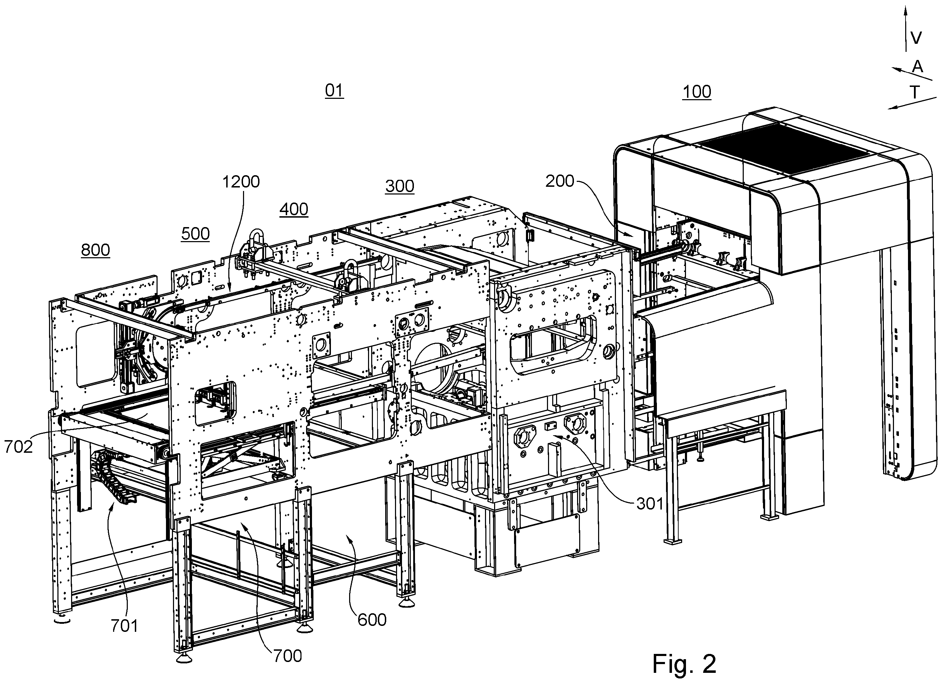

- Fig. 2: eine perspektivische Darstellung der Bogenbearbeitungsmaschine in einer bevorzugten Ausführungsform;

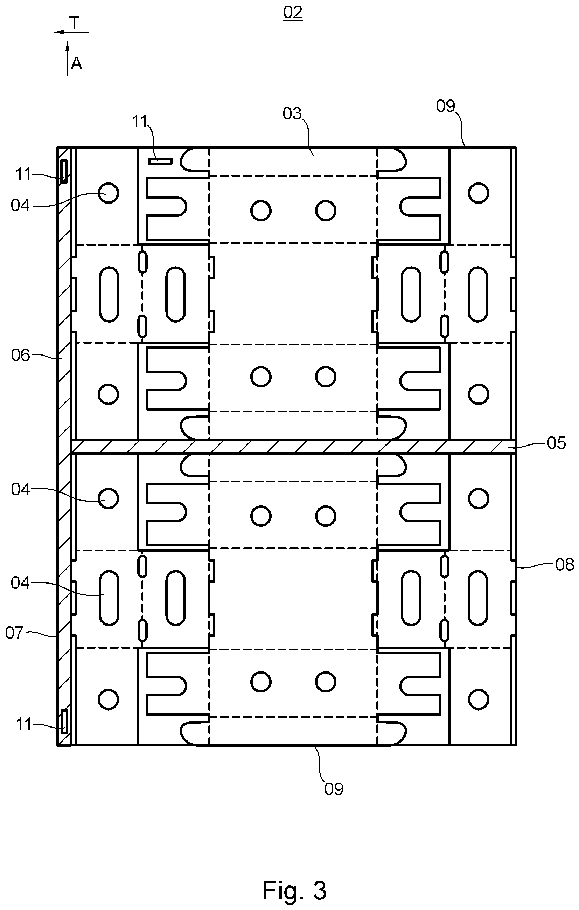

- Fig. 3: eine schematische Darstellung eines Bogens und mehrerer Nutzen;

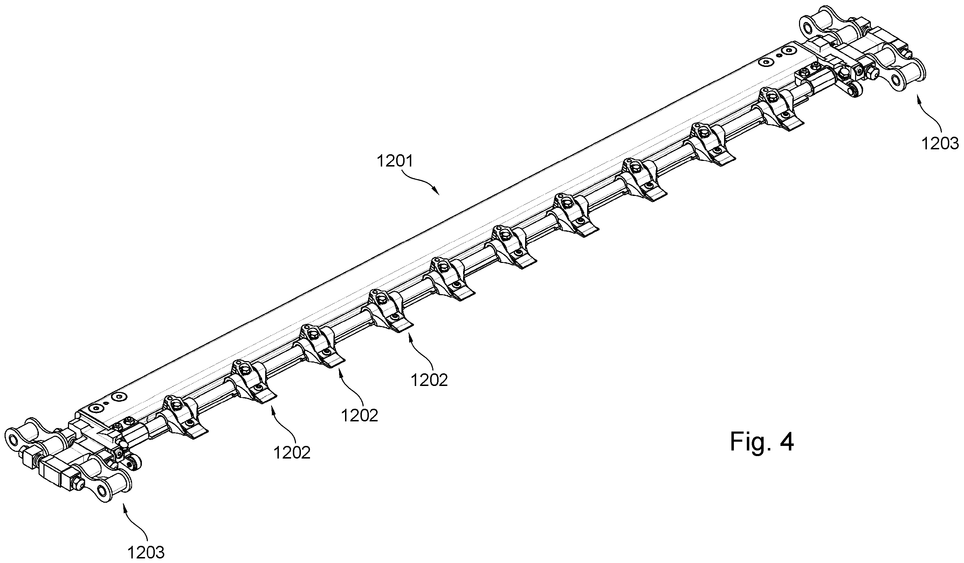

- Fig. 4: eine perspektivische Darstellung eines Kettengreiferwagens in einer bevorzugten Ausführungsform;

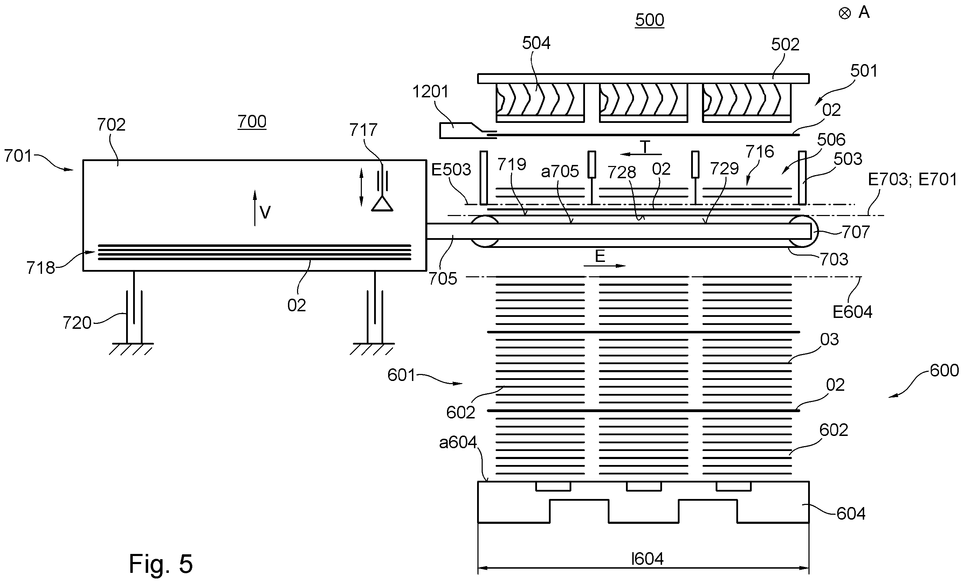

- Fig. 5: eine schematische Darstellung des Bogeneinlageaggregats, des Auslageaggregats und des Nutzentrennaggregats;

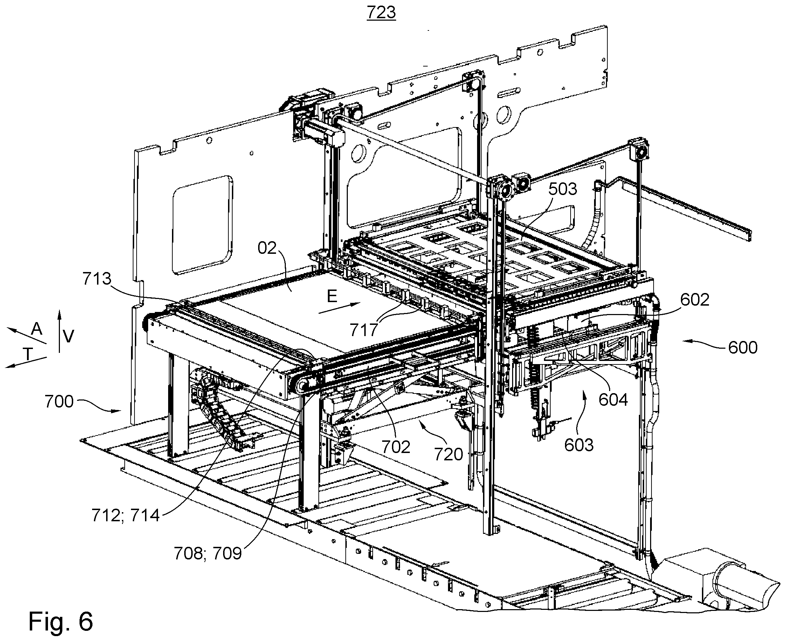

- Fig. 6: eine perspektivische Darstellung einer möglichen Ausführungsform des Bogenablageaggregats mit einer Bogenablageeinrichtung in der Einfahrposition;

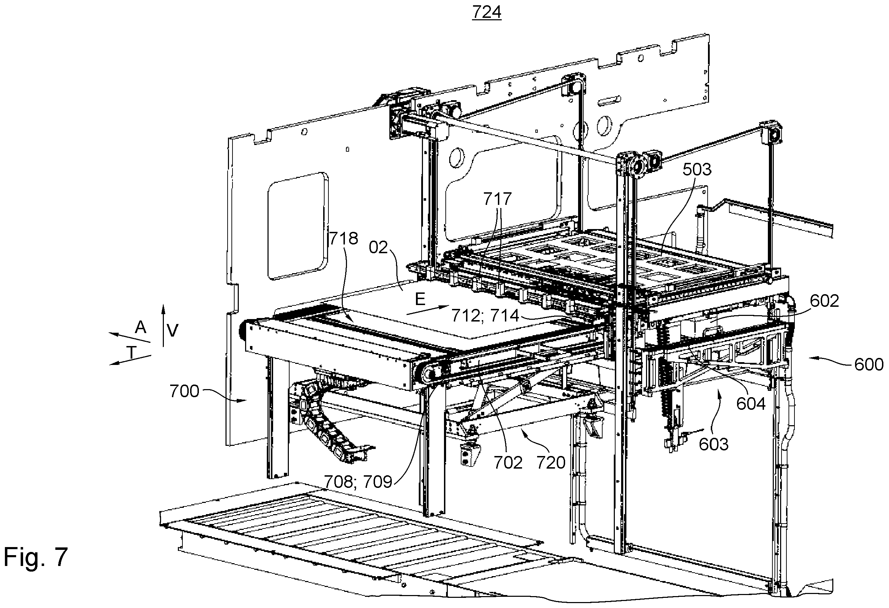

- Fig. 7: eine perspektivische Darstellung einer möglichen Ausführungsform des Bogenablageaggregats mit einer Bogenablageeinrichtung in der Zwischenspeicherposition;

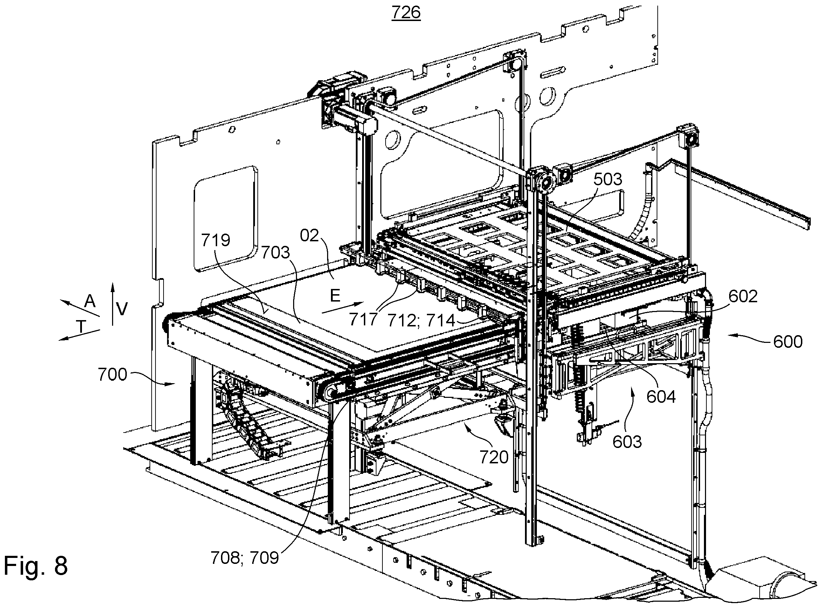

- Fig. 8: eine perspektivische Darstellung einer möglichen Ausführungsform des Bogenablageaggregats mit einer Bogenablageeinrichtung in der Ausfahrposition;

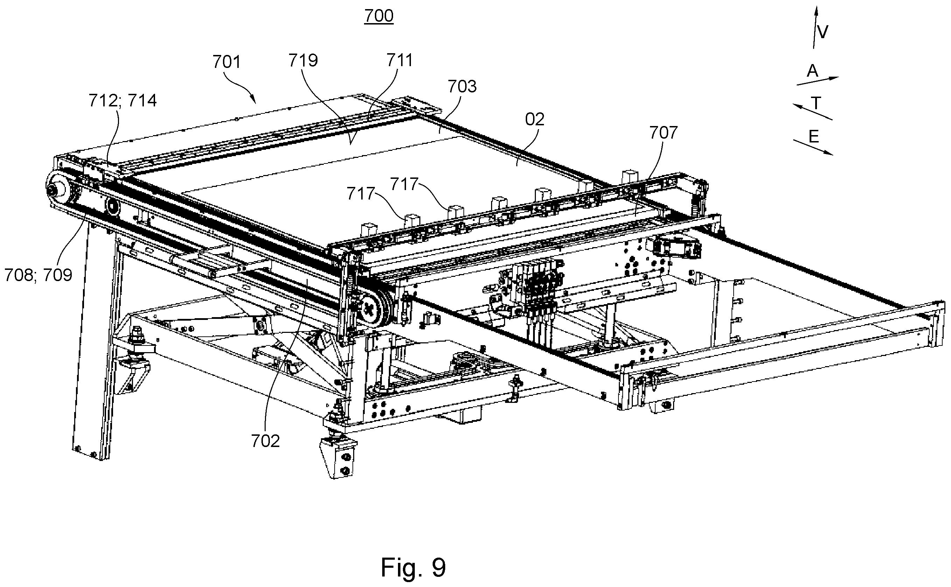

- Fig. 9: eine perspektivische Darstellung einer möglichen Ausführungsform des Bogenablageaggregats;

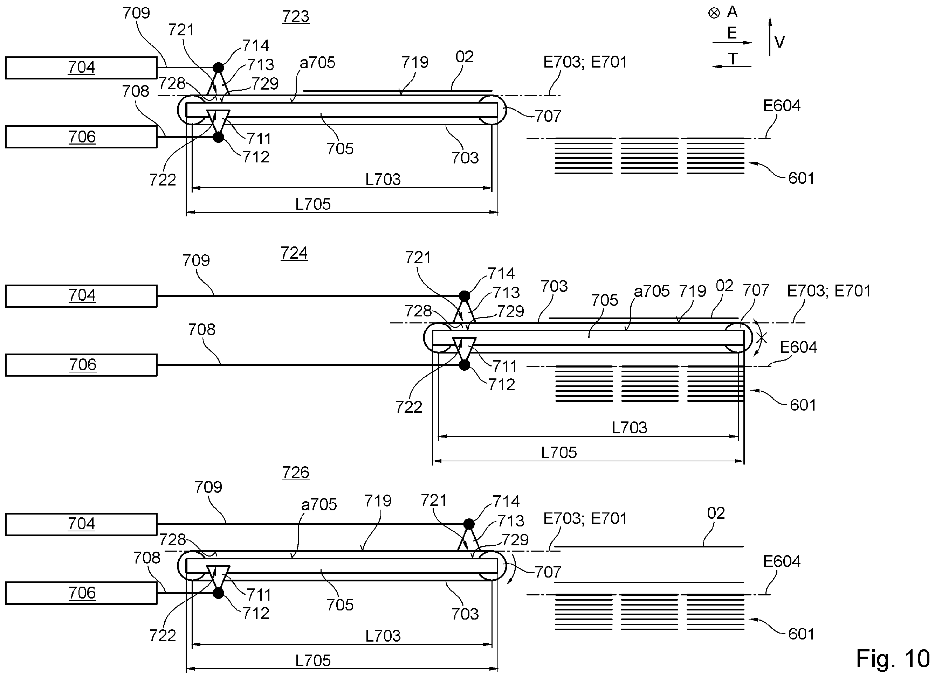

- Fig. 10: eine schematische Darstellung der verschiedenen Positionen der Bogenablageeinrichtung;

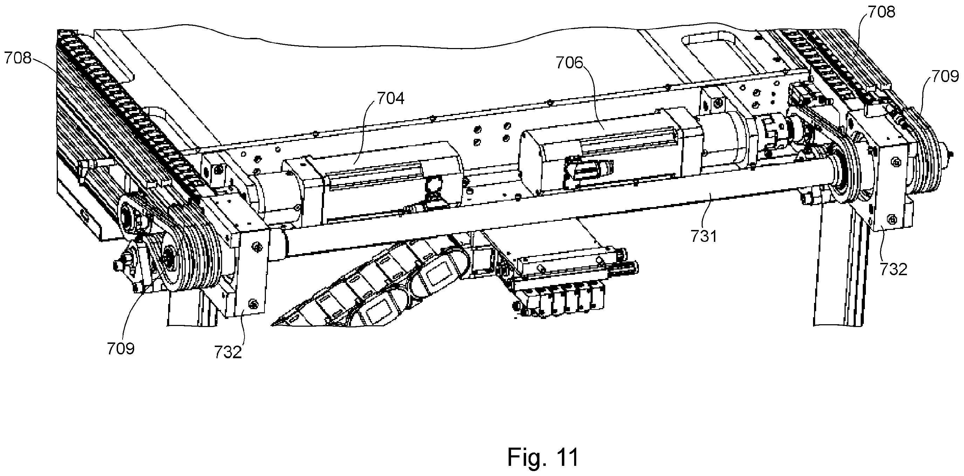

- Fig. 11: eine perspektivische Darstellung einer möglichen Ausführungsform der Anbindung der Antriebe an die Zugmittel.

Eine Bearbeitungsmaschine 01 ist als Bogenbearbeitungsmaschine 01, insbesondere als Stanzmaschine 01, weiter bevorzugt als Flachbettstanzmaschine 01, zur Bearbeitung von bogenförmigem Substrat 02 oder Bogen 02 ausgebildet. Im Vorangegangen und im Folgenden ist mit Bearbeitungsmaschine 01 und/oder Bogenbearbeitungsmaschine 01 auch Stanzmaschine 01 gemeint. Die Bearbeitungsmaschine 01 weist mindestens ein Aggregat 100; 200; 300; 400; 500; 600; 650; 700; 800; 900, bevorzugt eine Vielzahl von Aggregaten 100; 200; 300; 400; 500; 600; 650; 700; 800; 900 auf. Bevorzugt umfasst die Bearbeitungsmaschine 01, insbesondere die Bogenbearbeitungsmaschine 01, vorzugsweise zumindest ein als Formgebungsaggregat 300 ausgebildetes Aggregat 300 zur Bearbeitung von Bogen 02. Sofern nicht explizit unterschieden wird, soll hier vom Begriff des bogenförmigen Substrates 02, speziell des Bogens 02, grundsätzlich jedes flächig und in Abschnitten vorliegendes Substrat 02, also auch tafelförmig oder plattenförmig vorliegendes Substrat 02, also auch Tafeln bzw. Platten, umfasst sein. Das so definierte bogenförmige Substrat 02 bzw. der Bogen 02 ist beispielsweise aus Pappe und/oder Wellpappe, d. h. Pappbogen und/oder Wellpappbogen oder durch Bogen, Tafeln oder ggf. Platten aus Kunststoff, Pappe, Glas, Holz oder Metall gebildet. Weiter bevorzugt handelt es sich bei dem bogenförmigen Substrat 02 um Papier und/oder Karton, insbesondere um Papier-und/oder Kartonbogen. Insbesondere werden im Vorangegangenen und im Folgenden mit dem Begriff des Bogens 02 sowohl solche Bogen 02 bezeichnet, die noch nicht mittels zumindest eines Aggregats 300; 400; 500; 650 bearbeitet wurden, als auch solche Bogen 02, die bereits mittels zumindest eines Aggregats 300; 400; 500; 650 bearbeitet wurden und dabei gegebenenfalls in ihrer Form und/oder ihrer Masse verändert wurden.

Nach DIN 6730 (Feb. 2011) ist Papier ein flächiger, im Wesentlichen aus Fasern meist pflanzlicher Herkunft bestehender Werkstoff, der durch Entwässerung einer Faserstoffaufschwemmung auf einem Sieb gebildet wird. Dabei entsteht ein Faserfilz, der anschließend getrocknet wird. Die flächenbezogene Masse von Papier beträgt bevorzugt maximal 225 g/m² (zweihundertfünfundzwanzig Gramm pro Quadratmeter).

Nach DIN 6730 (Feb. 2011) ist Pappe ein flächiger, im wesentlicher aus Fasern pflanzlicher Herkunft bestehender Werkstoff, der durch Entwässerung einer Faserstoffaufschwemmung auf einem oder zwischen zwei Sieben gebildet wird. Das Fasergefüge wird verdichtet und getrocknet. Bevorzugt wird Pappe durch Zusammenkleben oder Zusammenpressen aus Zellstoff gefertigt. Bevorzugt ist Pappe als Vollpappe oder Wellpappe ausgebildet. Bevorzugt beträgt die flächenbezogene Masse von Pappe von über 225 g/m² (zweihundertfünfundzwanzig Gramm pro Quadratmeter). Wellpappe ist Pappe aus einer oder mehrerer Lagen eines gewellten Papiers, das auf eine Lage oder zwischen mehreren Lagen eines anderen bevorzugt glatten Papiers oder Pappe geklebt ist.

Der Begriff Karton bezeichnet im Vorangegangenen und im Folgenden ein bevorzugt einseitig gestrichenes papiernes Flächengebilde mit einer flächenbezogenen Masse von mindestens 150 g/m² (hundertfünfzig Gramm pro Quadratmeter) und maximal 600 g/m² (sechshundert Gramm pro Quadratmeter). Bevorzugt weist ein Karton eine hohe Festigkeit relativ zu Papier auf.

Bevorzugt weist ein zu verarbeitender Bogen 02 ein Flächengewicht von mindestens 70 g/m² (siebzig Gramm pro Quadratmeter) und/oder von maximal 700 g/m² (siebenhundert Gramm pro Quadratmeter), bevorzugt maximal 500 g/m² (fünfhundert Gramm pro Quadratmeter), weiter bevorzugt maximal 200 g/m² (zweihundert Gramm pro Quadratmeter) auf. Vorzugsweise weist ein zu verarbeitender Bogen 02 eine Dicke von maximal 1 cm (ein Zentimeter), bevorzugt maximal 0,7 cm (null Komma sieben Zentimeter), weiter bevorzugt maximal 0,5 cm (null Komma fünf Zentimeter), weiter bevorzugt maximal 0,3 cm (null Komma drei Zentimeter) auf.

Der Begriff Nutzen bezeichnet im Vorangegangenen und im Folgenden bevorzugt die Anzahl gleicher und/oder unterschiedlicher Objekte, die aus dem gleichen Werkstoffstück gefertigt werden und/oder auf einem gemeinsamen Trägermaterial, beispielsweise einem gemeinsamen Bogen 02, angeordnet sind. Ein Nutzen 03 ist vorzugsweise jener Bereich eines Bogens 02, welcher als ein Produkt der Bogenbearbeitungsmaschine 01, insbesondere als ein Zwischenprodukt zur Herstellung eines Endproduktes, ausgebildet ist und/oder beispielsweise zu einem gewünschten oder geforderten Endprodukt weiterverarbeitet wird und/oder weiterverarbeitbar ausgebildet ist. Bevorzugt ist hier das gewünschte oder geforderte Endprodukt, welches bevorzugt durch Weiterverarbeitung des jeweiligen Nutzens 03 erzeugt wird, eine Verpackung, insbesondere eine Faltschachtel.

Ein Reststück 04; 05; 06 ist im Vorangegangenen und im Folgenden jener Bereich eines Bogens 02, welcher keinem Nutzen 03 entspricht. Gesammelte Reststücke 04; 05; 06 werden bevorzugt als Abfall bezeichnet. Ein Reststück 04; 05; 06 ist vorzugsweise als Beschnitt und/oder Ausbruch ausgebildet und/oder entfernbar. Bevorzugt wird während des Betriebs der Bogenbearbeitungsmaschine 01 das zumindest eine Reststück 04; 05; 06 in zumindest einem Formgebungsaggregat 300 vorzugsweise durch zumindest einen Bearbeitungsschritt des jeweiligen Bogens 02 erzeugt, beispielsweise in zumindest einem Stanzvorgang. Bevorzugt wird während des Betriebs der Bogenbearbeitungsmaschine 01 das zumindest eine Reststück 04; 05; 06 aus dem jeweiligen Bogen 02 zumindest teilweise entfernt und somit insbesondere von den jeweiligen Nutzen 03 des Bogens 02 getrennt. Bevorzugt ist zumindest ein als Ausbrechaggregat 400 ausgebildetes Aggregat 400 zumindest einen erstes Reststück 04, insbesondere zumindest ein Abfallstück 04, entfernend ausgebildet und/oder zur Entfernung von zumindest einem Abfallstück 04 ausgebildet. Bevorzugt ist zumindest ein als Nutzentrennaggregat 500 ausgebildetes Aggregat 500 zumindest ein zweites Reststück 06; insbesondere zumindest eine Greiferkante 06, entfernend ausgebildet und/oder zur Entfernung von zumindest einer Greiferkante 06 ausgebildet. Beispielsweise umfasst ein Bogen 02 einen als Steg 05 ausgebildetes Reststück 05. Insbesondere sind durch den zumindest einen Steg 05 die Nutzen 03 voneinander beabstandet.

Der für den Transport eines Bogens 02 vorgesehene Raumbereich, den der Bogen 02 im Fall seiner Anwesenheit zumindest zeitweise einnimmt, ist der Transportweg. Der Transportweg wird zumindest in einem Abschnitt durch zumindest ein Bestandteil eines als Transportsystem 1200 ausgebildeten Systems 1200 festgelegt.

Eine Transportrichtung T ist eine für einen formgebenden Betriebszustand zumindest eines Formgebungsaggregates 300 der Bearbeitungsmaschine 01 vorgesehene Richtung T, in welche der Bogen 02 im Fall seiner Anwesenheit an jedem Punkt des Transportweges transportiert wird. Die insbesondere für einen Transport von Bogen 02 vorgesehene Transportrichtung T ist eine Richtung T, die bevorzugt zumindest im Wesentlichen und weiter bevorzugt vollständig horizontal orientiert ist. Zusätzlich oder alternativ weist die Transportrichtung T bevorzugt von einem ersten Aggregat 100 der Bearbeitungsmaschine 01 zu einem letzten Aggregat 800; 900 der Bearbeitungsmaschine 01. Insbesondere weist die Transportrichtung T von einem Aggregat 100, insbesondere einem Anlegeraggregat 100, einerseits zu einem Aggregat 600, insbesondere einem Auslageaggregat 600, andererseits. Zusätzlich oder alternativ weist die Transportrichtung T bevorzugt in eine Richtung, in der die Bogen 02 abgesehen von vertikalen Bewegungen oder vertikalen Komponenten von Bewegungen transportiert werden, insbesondere von einem ersten Kontakt mit einem dem Anlegeraggregat 100 nachgeordneten Aggregat 200; 300; 400; 500; 600; 650; 700; 800; 900 der Bearbeitungsmaschine 01 oder ersten Kontakt mit der Bearbeitungsmaschine 01 bis zu einem letzten Kontakt mit der Bearbeitungsmaschine 01. Die Transportrichtung T ist bevorzugt diejenige Richtung T, in der eine horizontale Komponente in eine Richtung weist, die von dem Anlegeraggregat 100 zu dem Auslageaggregat 600 orientiert ist. Bevorzugt zeigt die Transportrichtung T von einer Anlegerseite zu einer Auslageseite.

Die Anlegerseite entspricht bevorzugt der Stirnseite der Bogenbearbeitungsmaschine 01, bevorzugt der Seite, an der das zumindest eine Anlegeraggregat 100 angeordnet ist. Die der Anlegerseite gegenüberliegende Seite der Bogenbearbeitungsmaschine 01 entspricht bevorzugt der Auslageseite. Insbesondere ist an der Auslageseite das letzte Aggregat 800; 900 der Bogenbearbeitungsmaschine 01, bevorzugt das zumindest eine gemeinsame Aggregat 900 und/oder das zumindest eine Reststückauslageaggregat 800, angeordnet. Bevorzugt sind die Anlegerseite und die Auslageseite parallel zu einer Richtung A, insbesondere einer Querrichtung A, und einer Arbeitsbreite angeordnet.

Die Querrichtung A ist bevorzugt eine horizontal verlaufende Richtung A. Die Querrichtung A ist orthogonal zu der vorgesehenen Transportrichtung T der Bogen 02 und/oder orthogonal zu dem vorgesehenen Transportweg der Bogen 02 durch das zumindest eine Aggregat 100; 200; 300; 400; 500; 600; 650; 700; 800; 900 der Bearbeitungsmaschine 01 orientiert. Vorzugsweise ist die Querrichtung A von einer Bedienerseite der Bearbeitungsmaschine 01 zu einer Antriebsseite der Bearbeitungsmaschine 01 orientiert.

Eine vertikale Richtung V ist bevorzugt diejenige Richtung V, welche orthogonal zu einer Ebene aufgespannt durch die Transportrichtung T und die Querrichtung A angeordnet ist. Die vertikale Richtung V ist bevorzugt senkrecht von unten und/oder von einem Boden der Bearbeitungsmaschine 01 und/oder von einem untersten Bestandteil der Bearbeitungsmaschine 01 nach oben und/oder zu einem obersten Bestandteil der Bearbeitungsmaschine 01 und/oder zu einer obersten Abdeckung der Bearbeitungsmaschine 01 orientiert.

Die Bedienerseite der Bearbeitungsmaschine 01 ist bevorzugt diejenige Seite der Bearbeitungsmaschine 01 parallel zu der Transportrichtung T, von welcher einem Bediener zumindest teilweise und zumindest zeitweise Zugriff in die einzelnen Aggregate 100; 200; 300; 400; 500; 600; 650; 700; 800; 900 der Bearbeitungsmaschine 01 möglich ist, beispielsweise bei Wartungsarbeiten und/oder Wechsel von zumindest einem Formgebungswerkzeug.

Die Antriebsseite der Bearbeitungsmaschine 01 ist bevorzugt diejenige Seite der Bearbeitungsmaschine 01 parallel zu der Transportrichtung T, welche der Bedienerseite gegenüberliegt. Die Antriebsseite weist bevorzugt zumindest Teile, bevorzugt zumindest einen Großteil, eines Systems 1000, insbesondere eines Antriebssystems 1000 auf.

Die Arbeitsbreite ist im Vorangegangenen und im Folgenden die maximale Breite, die ein Bogen 02 aufweisen darf, um durch das zumindest eine Aggregat 100; 200; 300; 400; 500; 600; 650; 700; 800; 900, insbesondere die jeweiligen Aggregate 100; 200; 300; 400; 500; 600; 650; 700; 800; 900, der Bearbeitungsmaschine 01 transportiert werden zu können und/oder um noch mit dem zumindest einen Formgebungsaggregat 300 der Bearbeitungsmaschine 01 verarbeitet werden zu können, dies entspricht somit der maximalen mit dem zumindest einen Formgebungsaggregat 300 der Bearbeitungsmaschine 01 verarbeitbaren Breite des jeweiligen Bogens 02. Die Arbeitsbreite der Bearbeitungsmaschine 01, insbesondere Bogenbearbeitungsmaschine 01, beträgt bevorzugt zumindest 30 cm (dreißig Zentimeter), weiter bevorzugt zumindest 50 cm (fünfzig Zentimeter), noch weiter bevorzugt zumindest 80 cm (achtzig Zentimeter), noch weiter bevorzugt zumindest 120 cm (hundertzwanzig Zentimeter) und noch weiter bevorzugt zumindest 150 cm (hundertfünfzig Zentimeter).

Der zu bearbeitenden Bogen 02 weist bevorzugt eine Bogenbreite, bevorzugt parallel zur Querrichtung A, von mindestens 200 mm (zweihundert Millimeter), bevorzugt mindestens 300 mm (dreihundert Millimeter), weiter bevorzugt mindestens 400 mm (vierhundert Millimeter) auf. Die Bogenbreite beträgt vorzugsweise maximal 1.500 mm (tausendfünfhundert Millimeter), weiter bevorzugt maximal 1.300 mm (tausenddreihundert Millimeter), noch weiter bevorzugt maximal 1.060 mm (tausendsechzig Millimeter). Eine Bogenlänge, bevorzugt parallel zur Transportrichtung T, beträgt beispielsweise mindestens 150 mm (hundertfünfzig Millimeter), bevorzugt mindestens 250 mm (zweihundertfünfzig Millimeter), weiter bevorzugt mindestens 350 mm (dreihundertfünfzig Millimeter). Weiter beträgt eine Bogenlänge beispielsweise maximal 1.200 mm (tausendzweihundert Millimeter), bevorzugt maximal 1.000 mm (tausend Millimeter), weiter bevorzugt maximal 800 mm (achthundert Millimeter).

Ein Bogen 02 weist mehrere Kanten 07; 08; 09 auf. Insbesondere ist eine als Vorderkante 07 ausgebildete Kante 07 in Transportrichtung T am Bogen 02 vorne orientiert und parallel zur Querrichtung A angeordnet. Insbesondere ist die Vorderkante 07 diejenige Kante 07 des jeweiligen Bogens 02, die zum Transport des jeweiligen Bogens 02 bevorzugt durch zumindest einen Bestandteil der Bogenbearbeitungsmaschine 01, insbesondere durch zumindest ein Halteelement 1202 des Transportsystems 1200, fassbar ist und/oder an welcher zumindest ein Bestandteil der Bogenbearbeitungsmaschine 01, insbesondere durch zumindest ein Halteelement 1202 des Transportsystems 1200, den jeweiligen Bogen 02 fasst. Eine als Hinterkante 08 ausgebildete Kante 08 ist bevorzugt der Vorderkante 07 gegenüber liegend angeordnet. Weiter bevorzugt sind Vorderkante 07 und Hinterkante 08 parallel zueinander angeordnet. Insbesondere ist eine Hinterkante 08 in Transportrichtung T am Bogen 02 hinten orientiert und parallel zur Querrichtung A angeordnet. Weiter umfasst der Bogen 02 zwei als Seitenkanten 09 ausgebildete Kanten 09. Die zwei Seitenkanten 09 sind bevorzugt parallel zur Transportrichtung T angeordnet und orthogonal zur Querrichtung A angeordnet. Bevorzugt sind die Seitenkanten 09 bevorzugt jeweils orthogonal zur Vorderkante 07 und/oder zur Hinterkante 08 des Bogens 02 angeordnet.

Der Bogen 02 weist bevorzugt zumindest ein Druckbild auf. Das Druckbild beschreibt im Vorangegangen und im Folgenden eine Darstellung auf dem Bogen 02, welche der Summe aller Bildelemente entspricht, wobei die Bildelemente während zumindest einer Arbeitsstufe und/oder zumindest eines Druckvorgangs auf den Bogen 02, bevorzugt vor einer Bearbeitung durch die Bogenbearbeitungsmaschine 01, übertragen wurden und/oder übertragbar sind. Bevorzugt weist die Oberfläche des Bogens 02 zumindest einen unbedruckten Bereich, insbesondere unbedruckten Randbereich, auf. Insbesondere hält das zumindest eine Halteelement 1202 den Bogen 02 bevorzugt zumindest am unbedruckten Randbereich der Vorderkante 07 fest, welcher als Reststück 06 und/oder Greiferkante 06 ausgebildet ist.

Bevorzugt weist der Bogen 02 zumindest eine Druckmarke 11, bevorzugt zumindest zwei Druckmarken 11 auf. Eine Druckmarke 11 ist im Vorangegangenen und im Folgenden eine Marke beispielsweise zum Überprüfen eines Passers und/oder eines Registers und/oder bevorzugt zur Ausrichtung des Bogens 02 in Transportrichtung T und/oder Querrichtung A.

Unter einem Aggregat 100; 200; 300; 400; 500; 600; 650; 700; 800; 900 ist bevorzugt jeweils eine Gruppe von Einrichtungen zu verstehen, die funktionell zusammenwirken, insbesondere um einen bevorzugt in sich geschlossenen Bearbeitungsvorgang von zumindest einem Substrat 02 durchführen zu können. Vorzugsweise umfasst ein Aggregat 100; 200; 300; 400; 500; 600; 650; 700; 800; 900 jeweils einen Maschinenabschnitt der Bearbeitungsmaschine 01, welcher bevorzugt von weiteren Maschinenabschnitten zumindest teilweise räumlich trennbar angeordnet ist.

Ein System 1000; 1100; 1200 der Bearbeitungsmaschine 01 ist bevorzugt zumindest eine Einrichtung, welche mit zumindest einem Aggregat 100; 200; 300; 400; 500; 600; 650; 700; 800; 900, bevorzugt mit zumindest zwei voneinander verschiedenen Aggregaten 100; 200; 300; 400; 500; 600; 650; 700; 800; 900, der Bearbeitungsmaschine 01 zumindest zeitweise, insbesondere dauerhaft, in Kontakt steht und/oder in Wechselwirkung und/oder in Wirkverbindung treten kann.

Die Bearbeitungsmaschine 01 umfasst bevorzugt zumindest ein als Anlegeraggregat 100 ausgebildetes Aggregat 100. Bevorzugt ist das Anlegeraggregat 100 als Anleger 100, weiter bevorzugt als Bogenanleger 100, weiter bevorzugt als Bogenanlegeraggregat 100 ausgebildet. Bevorzugt ist das Anlegeraggregat 100 als das in Transportrichtung T erste Aggregat 100 der Bearbeitungsmaschine 01 ausgebildet. Bevorzugt ist das Anlegeraggregat 100 Bogen 02 auf den Transportweg der Bearbeitungsmaschine 01 zuführend ausgebildet und/oder Bogen 02 zu zumindest einem dem Anlegeraggregat 100 in Transportrichtung T nachgeordneten Aggregat 200; 300; 400; 500; 600; 650; 700; 800; 900 zuführend ausgebildet.

In Transportrichtung T nach dem zumindest einen Anlegeraggregat 100 ist bevorzugt zumindest ein als Anlageaggregat 200 ausgebildetes Aggregat 200 angeordnet. Bevorzugt ist das zumindest eine Anlageaggregat 200 zur Zuführung von Bogen 02, bevorzugt von einer sequenziellen Zuführung von Bogen 02, zu dem zumindest einen Formgebungsaggregat 300 ausgebildet. Bevorzugt weist das zumindest eine Anlageaggregat 200 zumindest eine Einrichtung zur Erfassung von Bogen 02 auf.

Bevorzugt ist ein jeweiliger Bogen 02 durch das zumindest eine Anlageaggregat 200 betreffend seiner Lage in Transportrichtung T und/oder in Querrichtung A zumindest teilweise, bevorzugt vollständig, ausrichtbar.

In Transportrichtung T nach dem zumindest einen Anlegeraggregat 100 und bevorzugt nach dem zumindest einen Anlageaggregat 200 ist vorzugsweise zumindest ein als Formgebungsaggregat 300 ausgebildetes Aggregat 300 angeordnet. Bevorzugt weist das zumindest eine Formgebungsaggregat 300 zumindest ein Formgebungswerk 301 auf. Bevorzugt ist das Formgebungswerk 301 als Stanzwerk 301, weiter bevorzugt als Flachbettstanzwerk 301, ausgebildet. Das entsprechende Aggregat 300 ist dann bevorzugt als Stanzaggregat 300 und/oder Rillaggregat 300 und/oder Schneidaggregat 300 und/oder Stanze 300, weiterbevorzugt als Flachbettstanzaggregat 300 und/oder Flachbettstanze 300, ausgebildet.

Als Rillaggregat 300 wird im Vorangegangen und im Folgenden eine Einrichtung zur teilweise Durchtrennung und/oder Dickenreduzierung und/oder Abtragung des zu bearbeitenden Bogens 02, insbesondere des Verpackungsmaterials, bezeichnet. Insbesondere werden in das vorzugsweise papierhaltige oder kartonhaltige Verpackungsmaterial, insbesondere den Bogen 02, Kerben und/oder Rillungen eingebracht. Beispielsweise wird bei Wellpappe die oberste Schicht in zumindest einem Rillaggregat 300 durchtrennt. Insbesondere kann der Bogen 02, insbesondere das Verpackungsmaterial, so bevorzugt mit geringerem Kraftaufwand in eine bestimmte Form, z. B. dreidimensionale Form, geknickt und/oder gefaltet werden. Als Schneidaggregat 300 oder Stanzaggregat 300 wird bevorzugt eine Einrichtung zur Durchtrennung, bevorzugt vollständige Durchtrennung des Bogens 02, insbesondere des Verpackungsmaterials, an bestimmten Stellen bezeichnet. Insbesondere kann das zumindest eine Reststück 04; 05; 06, insbesondere das nicht benötigte Verpackungsmaterial, von den Nutzen 03 so anschließend leicht abgetrennt werden.

Das zumindest eine Formgebungswerk 301 umfasst bevorzugt zumindest ein oberes Formgebungswerkzeug, insbesondere zumindest ein oberes Stanzwerkzeug, und/oder zumindest ein unteres Formgebungswerkzeug, insbesondere zumindest ein unteres Stanzwerkzeug. Bevorzugt ist dem zumindest einen oberen Formgebungswerkzeug jeweils zumindest ein unteres Formgebungswerkzeug, bevorzugt genau ein unteres Formgebungswerkzeug, zugeordnet. Bevorzugt ist zumindest ein Formgebungswerkzeug bewegbar, bevorzugt in vertikaler Richtung V bewegbar, ausgebildet. Weiter bevorzugt ist jeweils zumindest ein oberes Formgebungswerkzeug und/oder jeweils zumindest ein unteres Formgebungswerkzeug in vertikaler Richtung V bewegbar ausgebildet. Bevorzugt ist das zumindest eine obere Formgebungswerkzeug und das zumindest eine untere Formgebungswerkzeug aufeinander und insbesondere auf den Nutzen 03 und/oder den Bogen 02 abgestimmt. Vorzugsweise, insbesondere wenn sowohl das zumindest eine obere Formgebungswerkzeug als auch das zumindest eine untere Formgebungswerkzeug bewegbar ausgebildet sind, so ist die Bewegung der jeweiligen Formgebungswerkzeuge bevorzugt zeitlich aufeinander abgestimmt und/oder abstimmbar. Bevorzugt weisen das jeweils obere Formgebungswerkzeug und das jeweils untere Formgebungswerkzeug während eines Stanzvorgangs eine gegenläufige Relativbewegung zueinander auf, sodass die Formgebungswerkzeuge in vertikaler Richtung V aufeinander zu und/oder voneinander weg relativ bewegt werden und/oder relativ bewegbar sind. Bevorzugt steht das zumindest eine obere Formgebungswerkzeug zumindest zeitweise, bevorzugt zumindest einmal pro Maschinenzyklus, weiter bevorzugt in einer geschlossenen Position des zumindest einen Formgebungswerks 301, in direktem Kontakt zu dem zumindest einen unteren Formgebungswerkzeug. Bevorzugt ist das zumindest eine obere Formgebungswerkzeug zu dem zumindest einen unteren Formgebungswerkzeug in einer geöffneten Position des Formgebungswerks 301 mit einem Abstand größer Null beabstandet.

Bevorzugt weist die Bearbeitungsmaschine 01 zumindest ein Antriebssystem 1000 auf. Bevorzugt steht das jeweilige Formgebungswerkzeug in Kontakt, bevorzugt in Wirkverbindung, zu dem zumindest einen Antriebssystem 1000 und/oder ist durch das Antriebssystem 1000 zumindest zeitweise, bevorzugt mit einer zyklischen Bewegung, antreibbar.

Ein Bogen 02, welcher durch das zumindest eine Formgebungsaggregat 300 bearbeitet ist, also welcher auf dem Transportweg in Transportrichtung T nach dem zumindest einen Formgebungsaggregat 300 angeordnet ist, weist bevorzugt mindestens einen Stanzeindruck auf. Der zumindest eine Stanzeindruck ist beispielsweise als Rille und/oder Riefe und/oder Prägung und/oder Schnitt und/oder Perforierung ausgebildet. Bevorzugt ist der zumindest eine Stanzeindruck, insbesondere wenn dieser als Perforierung und/oder Schnitt ausgebildet ist, zumindest teilweise den mindestens einen Nutzen 03 von mindestens einem Reststück 04; 05; 06 und/oder von mindestens einem weiteren Nutzen 03 des betreffenden Bogens 02 trennend ausgebildet. Vorzugsweise weist ein Bogen 02, welcher durch das zumindest eine Formgebungsaggregat 300 bearbeitet ist, also welcher auf dem Transportweg in Transportrichtung T nach dem zumindest einen Formgebungsaggregat 300 angeordnet ist, den zumindest einen Nutzen 03, bevorzugt mindestens zwei Nutzen 03, und mindestens ein Reststück 04; 05; 06 auf.

In Transportrichtung T nach dem zumindest einen Formgebungsaggregat 300, bevorzugt im Anschluss an das zumindest eine Formgebungsaggregat 300, weiter bevorzugt ohne ein weiteres Aggregat der Bearbeitungsmaschine 01 dazwischen, ist zumindest ein als Ausbrechaggregat 400 ausgebildetes Aggregat 400 angeordnet. Bevorzugt ist das zumindest eine Ausbrechaggregat 400 zum Entfernen des zumindest einen ersten Reststückes 04, bevorzugt zum Entfernen des zumindest einen Abfallstückes 04, von dem jeweiligen Bogen 02 ausgebildet. Bevorzugt weist das zumindest eine Ausbrechaggregat 400 zumindest ein Ausbrechwerk 401 auf.

Ein Bogen 02, welcher durch das zumindest eine Ausbrechaggregat 400 bearbeitet ist, also welcher auf dem Transportweg in Transportrichtung T nach dem zumindest einen Ausbrechaggregat 400 angeordnet ist, weist bevorzugt lediglich den zumindest einen Nutzen 03, insbesondere eine Vielzahl von Nutzen 03, und das zumindest eine zweite Reststück 06 auf. Beispielsweise weist der Bogen 02, welcher durch das zumindest eine Ausbrechaggregat 400 bearbeitet ist, zusätzlich den zumindest einen Steg 05 auf.

Dem zumindest einen Formgebungsaggregat 300, insbesondere dem zumindest einen Stanzaggregat 300, ist bevorzugt zumindest ein als Nutzentrennaggregat 500 ausgebildetes Aggregat 500 in Transportrichtung T nachgeordnet. Bei Anwesenheit des zumindest einen Ausbrechaggregats 400 ist das zumindest eine Nutzentrennaggregat 500 auch dem zumindest einen Ausbrechaggregat 400 in Transportrichtung T nachgeordnet angeordnet. Das zumindest eine Nutzentrennaggregat 500 weist zumindest ein Nutzentrennwerk 501 zur Trennung der Nutzen 03 und des zumindest einen verbleibenden Reststücks 05; 06 voneinander auf.

Weiter weist die Bogenbearbeitungsmaschine 01 bevorzugt zumindest ein Aggregat 600, insbesondere Auslageaggregat 600 zur Auslage und Stapelung der Nutzen 03, weiter bevorzugt Auslage 600, auf. Im Transportweg der Bogen 02 ist das zumindest eine Auslageaggregat 600 dem zumindest einen Stanzaggregat 300 und weiter bevorzugt dem zumindest einen Nutzentrennaggregat 500 und/oder dem zumindest einen Ausbrechaggregat 400 nachgeordnet. In einer bevorzugten Ausführungsform umfasst das zumindest eine Nutzentrennaggregat 500 das zumindest eine Auslageaggregat 600, wobei bevorzugt die beiden Aggregate 500; 600 als gemeinsames Aggregat 650 ausgebildet sind.

Weiter weist die Bogenbearbeitungsmaschine 01 bevorzugt das zumindest eine, bevorzugt als Bogeneinlageaggregat 700, ausgebildete Aggregat 700 auf. Bevorzugt ist das zumindest eine Bogeneinlageaggregat 700 dem zumindest einen Nutzentrennaggregat 500 zugeordnet und weiter bevorzugt dem zumindest einen Nutzentrennaggregat 500 in der Transportrichtung T nachgeordnet angeordnet. Durch das zumindest eine Bogeneinlageaggregat 700 wird bevorzugt zur Erhöhung der Stabilität zumindest ein Bogen 02, bevorzugt zumindest ein unbearbeiteter Bogen 02, in einen Stapel von Bogen 02 und/oder, vorzugsweise voneinander getrennten, Nutzen 03 eingeführt. Insbesondere weist die Bogenbearbeitungsmaschine 01 das Bogeneinlageaggregat 700 zur Einlage eines Bogens 02 in einen Stapel von Nutzen 03 auf. Bevorzugt umfasst das Bogeneinlageaggregat 700 zumindest eine Bogenablageeinrichtung 701. Weiter umfasst das zumindest eine Bogenablageaggregat 700 zumindest eine Bogenkassette 702, insbesondere Zwischenbogenkassette 702, zur Speicherung von, bevorzugt unbearbeiteten, Bogen 02. Das Bogeneinlageaggregat 700 kann auch dem gemeinsamen Aggregat 650 nachgeordnet angeordnet sein.

Weiter weist die Bogenbearbeitungsmaschine 01, bevorzugt zumindest ein als Reststückauslageaggregat 800, ausgebildetes Aggregat 800 zum Sammeln von Reststücken 05; 06 auf. Insbesondere ist das zumindest eine Reststück 05; 06 von dem zumindest einen, bevorzugt von sämtlichen, Nutzen 03 getrennt. Das zumindest eine Reststückauslageaggregat 800 ist bevorzugt dem Nutzentrennaggregat 700 in Transportrichtung T nachgeordnet. Weiter bevorzugt ist das zumindest eine Reststückauslageaggregat 800 dem zumindest einen Auslageaggregat 600 nachgeordnet. In einer bevorzugten Ausführungsform ist das zumindest eine Reststückauslageaggregat 800 von dem zumindest einen Bogeneinlageaggregat 700 umfasst und sind diese als ein gemeinsames Aggregat 900 ausgebildet.

Bevorzugt steht das zumindest eine Antriebssystem 1000 in Wirkverbindung mit zumindest einem System 1100, insbesondere einem Steuerungssystem 1100, und/oder dem zumindest einen Transportsystem 1200.

Das zumindest eine Antriebssystem 1000 weist bevorzugt zumindest einen Taktgeber und/oder Winkellagegeber auf, weiter bevorzugt genau einen Taktgeber und/oder Winkellagegeber. Der zumindest eine Taktgeber und/oder Winkellagegeber ist vorzugsweise einen Leitwert, beispielsweise einen virtuellen Leitwert und/oder einen Leitwert in Form von Impulsen, erzeugend ausgebildet, worüber Bewegungen von Bestandteilen der Bearbeitungsmaschine 01 aufeinander abstimmbar sind und/oder abgestimmt sind.

Weiter weist die zumindest eine Bogenbearbeitungsmaschine 01 zumindest ein als Transportsystem 1200 ausgebildetes System 1200 auf. Das zumindest eine Transportsystem 1200 führt die Bogen 02, vorzugsweise durchgängig haltend, durch die Bogenbearbeitungsmaschine 01 und insbesondere zumindest durch die Aggregate 300; 400; 500; 650. Insbesondere werden die Bogen 02 bevorzugt zumindest weitestgehend horizontal in Transportrichtung T durch die Bogenbearbeitungsmaschine 01 geführt. Das Transportsystem 1200 ist bevorzugt als Kettentransportsystem 1200 und weiter bevorzugt als Kettengreifersystem 1200 ausgebildet. Insbesondere umfasst das zumindest eine Kettentransportsystem 1200 zumindest eine Führungseinrichtung 1203, wobei die zumindest eine Führungseinrichtung 1203 bevorzugt als zumindest eine Kette 1203 ausgebildet ist. Insbesondere ist die zumindest eine Führungseinrichtung 1203 zumindest teilweise, bevorzugt vollständig, außerhalb des Transportweges angeordnet. Bevorzugt ist das Kettengreifersystem 1200 mit zumindest einem, bevorzugt mehreren, Wagen 1201, insbesondere Greiferwagen 1201, ausgebildet. Insbesondere hält die zumindest eine Führungseinrichtung 1203 den zumindest einen Greiferwagen 1201, bevorzugt alle Greiferwagen 1201, und legt die Position des zumindest einen Greiferwagens 1201 im zumindest einen Transportsystem 1200 fest. Insbesondere weist der jeweilige Greiferwagen 1201 während der Bogenführung eine in Transportrichtung T durch die zumindest eine Führungseinrichtung 1203 vorgegebene Position auf. An jedem Wagen 1201 ist bevorzugt das zumindest eine Halteelement 1202, insbesondere der zumindest eine Greifer 1202, angeordnet. Insbesondere weist jeder Greiferwagen 1201, bevorzugt in gleichen Abständen zueinander, über die Arbeitsbreite in Querrichtung A mehrere Halteelemente 1202, bevorzugt Greifer 1202, auf. Das zumindest eine Halteelement 1202 wird bevorzugt von einer offenen Position in eine geschlossene Position zum Greifen eines Bogens 02 überführt. Bevorzugt wird ein Bogen 02 von dem zumindest einen Halteelement 1202 an der Übergabeposition des zumindest einen Anlageaggregats 200 erfasst. Bevorzugt wird zur Ablage des zumindest einen zweiten Reststücks 06, bevorzugt in dem zumindest einen Reststückauslageaggregat 800, das zumindest eine Halteelement 1202 bevorzugt von einer geschlossenen Position in eine offene Position überführt. Bevorzugt weist das Kettengreifersystem 1200 eine zyklische und/oder periodische Bewegung zum Bogentransport durch die Aggregate 300; 400; 500; 650 auf. Insbesondere ist die Bewegung so periodisch und/oder zyklisch ausgebildet, dass während des Bearbeitungsschritts in einem der Aggregate 300; 400; 500; 650 der Bogen 02 und/oder der Greiferwagen 1201, insbesondere der Kettengreiferwagen 1201 still steht. Insbesondere ist der zumindest eine Kettengreiferwagen 1201 und/oder der Bogen 02 zwischen den einzelnen Bearbeitungsschritten in Bewegung. Über das Steuerungssystem 1100 und das Antriebssystem 1000 ist, das Transportsystem 1200 mit den Transportmitteln der einzelnen Aggregate gekoppelt und synchronisiert.

Das zumindest eine Antriebssystem 1000 umfasst bevorzugt zumindest einen Antrieb.

Beispielsweise ist der zumindest eine Antrieb als zentraler Antrieb der Bearbeitungsmaschine 01 ausgebildet. Vorzugsweise weist das Antriebssystem 1000 einen als Zentralantrieb ausgebildeten Antrieb auf. Der zumindest eine Antrieb ist bevorzugt zur Übertragung von Drehmoment und/oder von linearer Bewegung auf zumindest einen Bestandteil zumindest eines Aggregates 100; 200; 300; 400; 500; 600; 650; 700; 800; 900, beispielsweise zumindest ein Transportmittel, und/oder auf zumindest einen Bestandteil des Transportsystems 1200 ausgebildet. Bevorzugt ist der zumindest eine Antrieb zur Übertragung von Drehmoment und/oder von linearer Bewegung auf zumindest zwei voneinander verschiedene Bestandteile eines selben Aggregates 100; 200; 300; 400; 500; 600; 650; 700; 800; 900 und/oder zweier voneinander verschiedener Aggregate 100; 200; 300; 400; 500; 600; 650; 700; 800; 900 und/oder auf zumindest einen Bestandteil des Transportsystems 1200 ausgebildet. Der zumindest eine Antrieb steht bevorzugt in Kontakt und/oder in Wirkverbindung zu zumindest einem zumindest zeitweise zu bewegenden Bestandteil zumindest eines Aggregates 100; 200; 300; 400; 500; 600; 650; 700; 800; 900 und/oder zu zumindest einem Bestandteil des Transportsystems 1200. Der zumindest eine Antrieb des zumindest einen Antriebssystems 1000 ist bevorzugt mit zumindest einem zu bewegenden Bestandteil zumindest eines Aggregates 100; 200; 300; 400; 500; 600; 650; 700; 800; 900, bevorzugt mit allen durch den jeweiligen Antrieb zu bewegenden Bestandteilen des jeweiligen Aggregates 100; 200; 300; 400; 500; 600; 650; 700; 800; 900 oder der jeweiligen Aggregate 100; 200; 300; 400; 500; 600; 650; 700; 800; 900, und/oder mit zumindest einem zu bewegenden Bestandteil des Transportsystems 1200 derart verknüpft und/oder verknüpfbar, dass der jeweilige zu bewegende Bestandteil, bevorzugt alle jeweiligen durch den Antrieb zu bewegenden Bestandteile, aufeinander abgestimmt betreibbar sind und/oder betrieben werden.

Bevorzugt ist das zumindest eine Antriebssystem 1000 zyklische und/oder periodische Bewegungen auf zumindest einen Bestandteil zumindest eines Aggregates 100; 200; 300; 400; 500; 600; 650; 700; 800; 900 und/oder des Transportsystems 1200 aufgrund des zumindest einen Antriebs übertragend ausgebildet.

In einer bevorzugten Ausführung umfasst das zumindest eine Antriebssystem 1000 genau einen Antrieb, welcher vorzugsweise mit voneinander verschiedenen Bestandteilen von voneinander verschiedenen Aggregaten 100; 200; 300; 400; 500; 600; 650; 700; 800; 900 und/oder mit zumindest einem Bestandteil des Transportsystems 1200 verknüpft ist.

Bevorzugt ist der zumindest eine Antrieb des Antriebsystems 1000 als Elektromotor, weiter bevorzugt als Servomotor, ausgebildet.

Bevorzugt weist die Bogenbearbeitungsmaschine 01 zumindest ein System 1100, insbesondere zumindest ein Steuerungssystem 1100, zur Steuerung und/oder zur Regelung auf. Das zumindest eine Steuerungssystem 1100 steht beispielsweise in Wirkverbindung mit den Aggregaten 100; 200; 300, 400; 500; 600;650; 700; 800; 900 und dem zumindest einen Antrieb. Die mehreren Aggregate 100; 200; 300; 400; 500; 600; 650; 700; 800; 900 stehen bevorzugt über das zumindest eine Steuerungssystem 1100 miteinander in Wirkverbindung und sind aufeinander abstimmbar und/oder können aufeinander abgestimmt werden. Die Bogenbearbeitungsmaschine 01 umfasst mehrere Sensoren, wobei deren Eingangssignale im zumindest einen Steuerungssystem 1100 erfasst und verarbeitet werden. Beispielsweise wird über das zumindest eine Steuerungssystem 1100 zumindest ein Ausgangssignal erzeugt, welches zumindest einen Bestandteil eines Aggregats 100; 200; 300, 400; 500; 600; 650; 700; 800; 900 steuert und/oder regelt und/oder mit einem Bestandteil eines Aggregats 100; 200; 300; 400; 500; 600; 650; 700; 800; 900 steuernd und/oder regelnd verbunden ist. Beispielsweise kann über das zumindest eine Steuerungssystem 1100 der zumindest eine Antrieb des zumindest einen Antriebssystems 1000 und/oder eine Ausrichtung von Bogen 02 und/oder eine Zufuhr von Bogen 02 in die Bearbeitungsmaschine 01 und/oder eine Bogeneinlage in den zumindest einen Auslagestapel 601 gesteuert und/oder geregelt werden. Ein Bediener kann beispielsweise über einen mit dem zumindest einen Steuerungssystem 1100 in Wirkverbindung stehenden Leitstand zumindest teilweise in die Betriebsweise der Bogenbearbeitungsmaschine 01 eingreifen.

Bevorzugt weist das zumindest eine Ausbrechaggregat 400 zumindest ein Ausbrechwerk 401 auf. Das zumindest eine Ausbrechwerk 401 umfasst bevorzugt zumindest ein oberes Ausbrechwerkzeug und/oder zumindest ein unteres Ausbrechwerkzeug, wobei das jeweilige Ausbrechwerkzeug vorzugsweise jeweils in vertikaler Richtung V bewegbar ausgebildet ist. Bevorzugt ist das obere Ausbrechwerkzeug mit einer vertikalen Relativbewegung zu dem unteren Ausbrechwerkzeug bewegbar ausgebildet. Bevorzugt sind das zumindest eine obere Ausbrechwerkzeug und das zumindest eine untere Ausbrechwerkzeug relativ zueinander aufeinander zu und/oder voneinander weg in vertikaler Richtung V bewegbar ausgebildet. Bevorzugt ist das zumindest eine obere Ausbrechwerkzeug und das zumindest eine untere Ausbrechwerkzeug aufeinander und insbesondere auf den Nutzen 03 und/oder Bogen 02 abgestimmt. Bevorzugt steht das zumindest eine obere Ausbrechwerkzeug zumindest zeitweise, bevorzugt zumindest einmal pro Maschinenzyklus, weiter bevorzugt in einer geschlossenen Position des zumindest einen Ausbrechwerks 401, in direktem Kontakt zu dem zumindest einen unteren Ausbrechwerkzeug. Bevorzugt ist das zumindest eine obere Ausbrechwerkzeug zu dem zumindest einen unteren Ausbrechwerkzeug in einer geöffneten Position des Ausbrechwerks 401 mit einem Abstand größer Null beabstandet.

Bevorzugt steht das jeweilige Ausbrechwerkzeug in Kontakt, bevorzugt in Wirkverbindung, zu dem zumindest einen Antriebssystem 1000 und/oder ist durch den zumindest einen Antrieb des Antriebssystems 1000 zumindest zeitweise, bevorzugt mit einer zyklischen Bewegung, antreibbar. Bevorzugt ist die Bewegung der jeweiligen Ausbrechwerkzeuge bevorzugt zeitlich aufeinander abgestimmt und/oder abstimmbar.

Bevorzugt ist das zumindest eine erste Reststück 04 durch ein Schließen der jeweiligen Ausbrechwerkzeuge, also eine Positionierung des betreffenden Ausbrechwerks 401 in der geschlossenen Position, zumindest teilweise, bevorzugt vollständig, von dem zumindest einen Nutzen 03 des Bogens 02 trennbar und/oder zumindest teilweise, bevorzugt vollständig, von dem zumindest einen Bogen 02 entfernbar.

Insbesondere umfasst das zumindest eine Nutzentrennwerk 501 zumindest ein in der vertikalen Richtung V oberhalb angeordnetes oberes Nutzentrennwerkzeug 502 und zumindest ein darunter angeordnetes unteres Nutzentrennwerkzeug 503. Bevorzugt ist das zumindest eine obere Nutzentrennwerkzeug 502 und das zumindest eine untere Nutzentrennwerkzeug 503 aufeinander und insbesondere auf den Nutzen 03 abgestimmt. Das untere Nutzentrennwerkzeug 503 weist einen Raumbereich 506 zur Stapelung und/oder Zwischenspeicherung 506 der Nutzen 03 auf. Das zumindest eine obere Nutzentrennwerkzeug 502 umfasst bevorzugt zumindest eine Drückeinrichtung 504, insbesondere eine als Erhöhung 504 des zumindest einen oberen Nutzentrennwerkzeugs 502 ausgebildete Drückeinrichtung 504. Die zumindest eine Drückeinrichtung 504 ist in den Raumbereich 506, insbesondere in eine Aussparung 506, des zumindest einen unteren Nutzentrennwerkzeug 503 hineinragbar und in einer geschlossenen Position des zumindest einen Nutzentrennwerks 501 hineinragend ausgebildet. Der durch das Transportsystem 1200, insbesondere durch das als Kettengreifersystem 1200 ausgebildete Transportsystem 1200, festgelegte Transportweg des Bogens 02 durch das zumindest eine Nutzentrennaggregat 500 ist bevorzugt in einer geöffneten Position des betreffenden Nutzentrennwerks 501 zwischen dem zumindest einen oberen Nutzentrennwerkzeug 502 und dem zumindest einen unteren Nutzentrennwerkzeug 503 angeordnet. In einer geschlossenen Position des betreffenden Nutzentrennwerks 501 ist zumindest das obere Nutzentrennwerkzeug 502 in den Transportweg des Bogens 02 eindringend angeordnet. Durch die Änderung der Position des zumindest einen Nutzentrennwerks 500, bevorzugt nur des oberen Nutzentrennwerkzeugs 502, aus der offenen Position in die geschlossene Position werden die Nutzen 03 von den verbleibenden Reststücken 05; 06 getrennt. Insbesondere ist ein Nutzen 03 so von einem Kontakt mit dem zumindest einen Transportsystem 1200 losgelöst angeordnet. Insbesondere wird dieser Vorgang zyklisch und/oder periodisch durch eine Kopplung mit dem zumindest einen Antriebsystem 1000 wiederholt. Insbesondere findet die Änderung der Position des zumindest einen Nutzentrennwerks 501 immer genau dann statt, wenn ein Bogen 02 sich im Transportweg unter dem zumindest einen oberen Nutzentrennwerkzeug 502 befindet.

Insbesondere ist in dieser bevorzugten Ausführungsform die zumindest eine Auslage 600 in der vertikalen Richtung V unter dem unteren Nutzentrennwerkzeug 503 angeordnet. Bevorzugt werden die Nutzen 03 nach einer Zwischenspeicherung 506 im unteren Nutzentrennwerkzeug 503 auf zumindest einem Stapel 601, vorzugsweise zumindest einem Auslagestapel 601 gestapelt. Bevorzugt umfasst der zumindest eine Auslagestapel 601 zumindest zwei, bevorzugt eine Vielzahl, von Einzelstapeln 602 von Nutzen 03 nebeneinander. Der zumindest eine Auslagestapel 601 ist dabei bevorzugt mittels einer Hubvorrichtung 603 in der vertikalen Richtung V bewegbar und/oder verstellbar angeordnet. Insbesondere ist so eine Anpassung der Höhe des zumindest einen Auslagestapels 601 z. B. an das untere Nutzentrennwerkzeug 503 und/oder an zumindest eine Bogenablageeinrichtung 701 möglich.

Die zumindest eine Bogenablageeinrichtung 701 ist zur Bogenablage bevorzugt zwischen das untere Nutzentrennwerkzeug 503 und den zumindest einen Auslagestapel 601 bewegbar und/oder einfahrbar und/oder bewegend und/oder einfahrend angeordnet. Insbesondere dann, wenn der zumindest eine Zwischenspeicher 506 des zumindest einen unteren Nutzentrennwerkzeugs 503 im zumindest einen Nutzentrennaggregat 500 zumindest teilweise, bevorzugt vollständig, mit Nutzen 03 gefüllt ist und/oder eine hinreichend große Instabilität, so dass ein Kippen zumindest eines Einzelstapels 602 droht, aufweist. Insbesondere wird die zumindest eine Hubvorrichtung 603 bevorzugt auf die zumindest eine Bogenablageeinrichtung 701 abgestimmt und insbesondere in der vertikalen Richtung V unter der zumindest einen Bogenablageeinrichtung 701, bevorzugt ohne eine weitere Einrichtung dazwischen, angeordnet.

Insbesondere werden die Reststücke 05; 06 in dem zumindest einen Reststückauslageaggregat 800 von zumindest einem Halteelement 1202, insbesondere zumindest einem Greifer 1202, des zumindest einen Transportsystems 1200 gelöst und mittels zumindest einer Sammeleinrichtung als Abfall gesammelt. Beispielsweise ist diese zumindest eine Sammeleinrichtung als zumindest ein Transportband mit zumindest einem Sammelbehälter ausgebildet.

Im Folgenden wird die Bogeneinlage des zumindest einen Bogeneinlageaggregats 700 näher beschrieben. Die Bogenbearbeitungsmaschine 01 weist im Bogeneinlageaggregat 700 zumindest eine Bogenablageeinrichtung 701 auf. Die zumindest eine Bogenablageeinrichtung 701 ist beispielsweise zur Zwischenspeicherung 506 mehrerer Einzelstapel 602 von Nutzen 03 oder zum Bogentransport eines Bogen 02, insbesondere eines Bogens 02 zur Zwischenbogeneinlage, angeordnet. Weiter umfasst die zumindest eine Bogenablageeinrichtung 701 bevorzugt zumindest ein Bogenablagemittel 705 und zumindest ein Ablageelement 703. Insbesondere ist das zumindest eine Bogenablagemittel 705 zur Ablage von Bogen 02 in der zumindest einen Bogenablageeinrichtung 701 angeordnet. Je nach Ausführung liegen die Bogen 02 und/oder Nutzen 03 und/oder Einzelstapel 602 von Nutzen 03 entweder direkt auf dem zumindest einen Bogenablagemittel 705 oder direkt auf dem zumindest einen Ablageelement 703 auf.

Das zumindest eine Bogenablagemittel 705 ist bevorzugt zumindest teilweise horizontal angeordnet. Insbesondere wird als horizontal angeordnet eine parallele Anordnung zu einer Ebene, die durch die Transportrichtung T und die Querrichtung A aufgespannt wird, bezeichnet. Das zumindest eine Bogenablagemittel 705 ist bevorzugt mittels zumindest eines Antriebes 706 verstellbar angeordnet. Das zumindest eine Bogenablagemittel 705 ist bevorzugt mittels des zumindest einen Antriebs 706 bevorzugt zumindest horizontal verstellbar angeordnet. Als horizontal verstellbar ist bevorzugt eine parallel zur Ebene, die durch die Transportrichtung T und die Querrichtung A aufgespannt wird, verstellbare Anordnung bezeichnet. Bevorzugt ist das zumindest eine Bogenablagemittel 705 in oder entgegen einer Einfahrrichtung E verstellbar angeordnet. Bevorzugt verläuft die Einfahrrichtung E parallel zu der Ebene, die durch die Transportrichtung T und die Querrichtung A, aufgespannt wird. Insbesondere ist die Einfahrrichtung E von der zumindest einen Bogenablageeinrichtung 701 zu einem Stapelelement 604 gerichtet angeordnet. Der zumindest eine Antrieb 706 ist bevorzugt gestellfest und/oder ortsfest an der zumindest einen Bogenablageeinrichtung 701 und/oder an dem Gestell der zumindest einen Bogenablageeinrichtung 701 angeordnet. Insbesondere ist der zumindest eine Antrieb 706 des zumindest einen Bogenablagemittels 705 bei Überführung des zumindest einen Ablageelements 703 und/oder des zumindest einen Bogenablagemittels 705 von einer ersten in eine zweite Position in Position bleibend angeordnet und/oder bleibt in Position. Insbesondere ist der zumindest eine Antrieb 706 bei Verstellung des zumindest einen Ablageelements 703 relativ zu dem zumindest einen Bogenablagemittel 705 unbewegt. Insbesondere ist das zumindest einen Bogenablagemittel 705 über zumindest ein Anbindungselement 711 und/oder zumindest ein Führungselement 712 und/oder zumindest eine Linearführung 708 in Wirkverbindung mit dem zumindest einen Antrieb 706 angeordnet. Das zumindest eine Bogenablagemittel 705 weist zumindest ein fest mit dem zumindest einen Bogenablagemittel 705 verbundenes Anbindungselement 711 auf. Das zumindest eine Anbindungselement 711 ist bevorzugt relativ zum zumindest einen Bogenablagemittel 705 fixiert angeordnet. Das zumindest eine Bogenablagemittel 705 ist mittels zumindest eines linear geführten Führungselements 712 verstellbar angeordnet.

Über das zumindest eine Führungselement 712 ist das zumindest eine Anbindungselement 711 bevorzugt mit zumindest einer Linearführung 708 in Wirkverbindung angeordnet. Insbesondere ist die zumindest eine Linearführung 708 zumindest teilweise linear und horizontal geführt ausgebildet. Insbesondere ist das zumindest eine Führungselement 712 linear und horizontal verstellbar angeordnet und mit dem zumindest einen Anbindungselement 711 relativ zueinander fixiert verbunden. Ein solches Anbindungselement 711 ist beispielsweise als Befestigungsleiste ausgebildet und beispielsweise mittels Schrauben und/oder anderen Befestigungsmitteln an dem zumindest einen Bogenablagemittel 705 befestigt und/oder befestigt angeordnet. Das zumindest eine Anbindungselement 711 des zumindest einen Bogenablagemittels 705 ist über das zumindest eine linear geführte Führungselement 712 mit dem zumindest einen Antrieb 706 in Wirkverbindung angeordnet. Bevorzugt ist die zumindest eine Linearführung 708 als umlaufendes Zugmittel 708, beispielsweise als Kette, ausgebildet. Das zumindest eine Zugmittel 708 weist bevorzugt zumindest einen teilweise geradenförmigen Verlauf auf. Insbesondere verläuft das Zugmittel 708 in dem zumindest teilweise geradenförmigen Verlauf bevorzugt in einer horizontalen Ebene, parallel zur Ebene, die durch die Transportrichtung T und die Querrichtung A aufgespannt ist. Das zumindest eine Führungselement 712 ist bevorzugt auf diesem zumindest einen teilweise geradenförmigen Verlauf angeordnet und insbesondere relativ zur Linearführung 708 und/oder dem Zugmittel 708 fixiert angeordnet. Insbesondere ist das zumindest eine horizontal geführte Führungselement 712 über die Linearführung 708 verstellbar angeordnet.

Das zumindest eine Bogenablagemittel 705 weist bevorzugt eine Länge l705 und eine Breite auf. Die Länge l705 des zumindest einen Bogenablagemittels 705 entspricht bevorzugt der Abmessung des zumindest einen Bogenablagemittels 705 parallel zur Einfahrrichtung E. Die Länge l705 des zumindest einen Bogenablagemittels 705 entspricht bevorzugt einer Länge l604 des zumindest einen Stapelelements 604, insbesondere des zumindest einen Auslageelements 604. Weiter bevorzugt ist die Länge l705 kürzer oder länger, insbesondere maximal 30 % kürzer oder länger, als die Länge l604 des zumindest einen Stapelelements 604, insbesondere des zumindest einen Auslageelements 604. Bevorzugt ist die Länge l604 länger als eine Länge eines zu verarbeitenden Bogens 02. Weiter bevorzugt weist die Länge l604 zumindest eine Länge eines Stapels 601, insbesondere eines Auslagestapels 601, von Nutzen 03 auf.

Die Breite des zumindest einen Bogenablagemittels 705 entspricht bevorzugt einer Breite des zumindest einen Stapelelements 604, insbesondere des zumindest einen Auslageelements 604. Weiter bevorzugt ist die Breite kürzer oder länger, insbesondere maximal 30 % kürzer oder länger, als die Breite des zumindest einen Stapelelements 604, insbesondere des zumindest einen Auslageelements 604. In einer bevorzugten Ausführungsform sind die Breite und die Länge parallel zur Querrichtung A angeordnet. Insbesondere entspricht die Breite des zumindest einen Stapelelement 604, insbesondere des zumindest einen Auslageelements 604, bevorzugt zumindest der Arbeitsbreite, insbesondere der maximalen Arbeitsbreite, der Bogenbearbeitungsmaschine 01.

In einer anderen Ausführungsform entspricht die Breite mehrerer Stapelelemente 604 zusammen zumindest der maximalen Arbeitsbreite der Bogenbearbeitungsmaschine 01. Weiter bevorzugt beträgt die Breite des zumindest einen Stapelelements 604 zumindest der Breite eines Bogens 02. Die Länge l604 des zumindest einen Stapelelements 604, insbesondere des zumindest einen Auslageelement 604, und die Länge l705 des zumindest einen Bogenablagemittels 705 sind bevorzugt parallel zur Transportrichtung T angeordnet. Bevorzugt entspricht die Länge l604 des zumindest einen Stapelelements 604 bevorzugt maximal einer Länge l600 eines Auslageaggregats 600.

Weiter weist das zumindest eine Bogenablagemittel 705 eine Fläche a705 auf. Die maximale Fläche a705 des zumindest einen Bogenablagemittels 705 entspricht bevorzugt zumindest einer maximalen Fläche a604 des zumindest einen Stapelelements 604 und/oder dem zumindest einen Auslageelements 604. Insbesondere ist als Fläche a604 die Fläche des Stapelelements 604 bezeichnet, die der Multiplikation der Länge l604 des zumindest einen Stapelelements 604 und der Breite des zumindest einen Stapelelements 604 entspricht.

Weiter umfasst die zumindest eine Bogenablageeinrichtung 701 zumindest ein Ablageelement 703. Das zumindest eine Ablageelement 703 ist bevorzugt als Transportmittel 703 und weiter bevorzugt als zumindest teilweise oder vollständig geradenförmig ausgebildetes Transportmittel 703, bevorzugt parallel zur Transportrichtung T und/oder zur Einfahrrichtung E, ausgebildet. Insbesondere ist die geradenförmige Ausbildung des zumindest einen zumindest teilweise geradenförmig ausgebildete Transportmittel 703 in einer Richtung orientiert. Insbesondere ist die Hauptkomponente dieser Richtung parallel zur Einfahrrichtung E oder zur Transportrichtung T angeordnet. Wenn das zumindest eine zumindest teilweise geradenförmig ausgebildete Transportmittel 703 in mehrere Richtungen geradenförmig ausgebildet ist, ist insbesondere die Richtung mit der längsten Ausdehnung die Richtung dessen Hauptkomponente dieser Richtung parallel zur Einfahrrichtung E oder zur Transportrichtung T angeordnet ist. Insbesondere weist das zumindest eine zumindest teilweise geradenförmige ausgebildete Transportmittel 703, insbesondere im geradenförmig ausgebildeten Teil, zumindest eine geringe Krümmung aus. Bevorzugt ist ein Krümmungsradius größer als 10 m, weiter bevorzugt größer als 50 m und noch weiter bevorzugt größer als 500 m. Insbesondere weist das zumindest Transportmittel 703 zumindest eine Auflagefläche 719 auf. Insbesondere ist die zumindest eine Auflagefläche 719, die Fläche die mit einem Bogen 02 und/oder einem Stapel von Nutzen 03 in Berührung steht. Die Auflagefläche 719 ist bevorzugt zumindest teilweise, weiter bevorzugt vollständig, horizontal ausgebildet. Insbesondere ist die Auflagefläche 719 in zumindest teilweise geradenförmige ausgebildeten Bereich des zumindest einen Transportmittels 703 angeordnet. Beispielsweise zumindest mit einer Komponente horizontal ausgebildet. Insbesondere ist als horizontal die parallele Anordnung zur Ebene, die durch die Transportrichtung T und Querrichtung A aufgespannt wird, bezeichnet. Weiter bevorzugt ist die zumindest eine Auflagefläche 719 zumindest teilweise parallel zum zumindest einen Bogenablagemittel 705 angeordnet. Die zumindest eine Auflagefläche 719 ist bevorzugt, die von dem zumindest einen Bogenablagemittel 705 abgewandte Seite und die in vertikaler Richtung V höher angeordnete Fläche. Insbesondere zur Zwischenspeicherung 506 mehrerer Einzelstapel 602 von Nutzen 03.

Weiter weist das zumindest eine zumindest teilweise geradenförmig ausgebildete Transportmittel 703 eine der zumindest einen Auflagefläche 719 gegenüberliegende Fläche 728, insbesondere Kontaktfläche 728, auf. Insbesondere ist die Kontaktfläche 728 so angeordnet, dass die Kontaktfläche 728 dem zumindest einen Bogenablagemittel 705 zugewandt ist. Gegenüberliegend auf dem zumindest einen Bogenablagemittel 705 ist eine weitere Fläche 729, insbesondere Tragfläche 729, angeordnet. Die Tragfläche 729 ist bevorzugt so angeordnet, dass eine Deckung mit der Kontaktfläche 728 entsteht. Insbesondere ist die Tragfläche 729 die tragende Fläche auf dem zumindest einen Bogenablagemittel 705, das zumindest bei aufliegenden Bogen 02 und/oder Nutzen 03, in Kontakt mit dem Transportmittel 703 stehend angeordnet ist.

Insbesondere weist das zumindest eine geradenförmige Transportmittel 703 zumindest eine Länge l703 auf. Insbesondere ist mit der Länge l703 des zumindest teilweise geradenförmigen Transportmittels 703, die Länge l703 parallel zur Einfahrrichtung E der zumindest einen Bogenablageeinrichtung 701 bezeichnet. Weiter bevorzugt ist die Länge l703 des zumindest einen Ablageelements 703 die Ausdehnung der Auflagefläche 719 parallel zur Einfahrrichtung E. Insbesondere weist das zumindest teilweise geradenförmige Transportmittel 703 eine geringere Länge l703 als eine Länge l705 des zumindest einen horizontal verstellbaren Bogenablagemittels 705 auf. Weiter bevorzugt weist das zumindest eine teilweise geradenförmige Transportmittel 703 zumindest eine Länge l703 von zumindest einem Drittel einer Länge l705 des zumindest einen Bogenablagemittels 705 auf. In einer Ausführungsform sind die Länge l705 und die Länge l703 gleich lang. Die Auflagefläche 719 weist beispielsweise zumindest 20 %, bevorzugt 50 %, weiter bevorzugt 80 % der maximalen Fläche a705 des zumindest einen Bogenablagemittels 705 auf.

Auf dem zumindest einen Transportmittel 703, insbesondere dem zumindest einen zumindest teilweise geradenförmig ausgebildeten Transportmittel 703 liegt in einer bevorzugten Ausführungsform zumindest ein Bogen 02 und/oder zumindest ein Nutzen 03 und/oder zumindest ein Einzelstapel 602 von Nutzen 03 direkt, insbesondere zumindest auf der Auflagefläche 719, auf. Insbesondere kann durch das zumindest eine zumindest teilweise geradenförmig ausgebildete Transportmittel 703 der zumindest eine Bogen 02 und/oder der zumindest eine Nutzen 03 und/oder der zumindest eine Einzelstapel 602 von Nutzen 03, relativ zu dem zumindest einen Bogenablagemittel 705 bewegt oder in Position gehalten werden. Insbesondere kann so ein zwischengespeicherter Einzelstapel 602 und/oder mehrere Einzelstapel 602 an Nutzen 03 auf beispielsweise ein Stapelelement 604 und/oder einen Auslagestapel 601 gestapelt und/oder abgelegt werden.

Das zumindest eine Transportmittel 703, insbesondere das zumindest eine zumindest teilweise geradenförmige Transportmittel 703, ist bevorzugt als Transportband 703 ausgebildet. Bevorzugt erstreckt sich das zumindest eine Transportband 703 über zumindest 80 % der Breite des zumindest einen Bogenablagemittels 705. Beispielsweise weist das zumindest eine Transportband 703 bevorzugt zumindest ein Umlenkmittel 707, bevorzugt zumindest zwei Umlenkmitteln 707, weiter bevorzugt genau zwei Umlenkmitteln 707, auf. Insbesondere ist das zumindest eine Umlenkmittel 707 mit dem zumindest einen Bogenablagemittel 705 verbunden angeordnet. Insbesondere ist das zumindest eine Umlenkmittel 707 als zumindest eine Walze 707 ausgebildet und auf dem zumindest einen Bogenablagemittel 705, insbesondere drehbeweglich, gelagert angeordnet.

In einer weiteren bevorzugten Ausführungsform ist das zumindest eine Transportmittel 703 mit mehreren über der Querrichtung A angeordneten Transportbändern 703 ausgebildet.

Das zumindest eine Transportband 703 ist bevorzugt zumindest teilweise horizontal angeordnet. Insbesondere ist als horizontal angeordnet eine parallele Anordnung zu einer Ebene, die durch die Transportrichtung T und die Querrichtung A aufgespannt ist, gemeint. Weiter bevorzugt ist als horizontal angeordnet eine parallele Anordnung eines Normalenvektors auf einer Ebene E703 des zumindest einen Transportbandes 703 bezeichnet. Insbesondere ist die Ebene E703 durch eine Verbindungsgerade durch die beiden in vertikaler Richtung V am höchsten liegenden Punkte auf dem Rand eines Querschnitts durch das zumindest eine Umlenkmittel 707 und entlang der Arbeitsbreite in Querrichtung A aufgespannt.

Das zumindest eine zumindest teilweise geradenförmig ausgebildete Transportmittel 703 ist bevorzugt verstellbar, insbesondere zumindest teilweise horizontal verstellbar, angeordnet. Beispielsweise ist das zumindest eine zumindest teilweise geradenförmige Transportmittel 703 mit einer geringen Reibung, durch das zumindest eine gelagerte Umlenkmittel 707, angeordnet. Insbesondere ist das zumindest eine Umlenkmittel 707 an dem zumindest einen Bogenablagemittel 705, bevorzugt stirnseitig, gelagert. Insbesondere ist das zumindest eine Umlenkmittel 707 drehbeweglich auf dem zumindest einen Bogenablagemittel 705 gelagert angeordnet.

In einer bevorzugten Ausführungsform ist das zumindest eine Transportmittel 703 mittels zumindest eines Antriebes 704 und/oder mittels zumindest eines weiteren Antriebs 704, bevorzugt zumindest teilweise horizontal, verstellbar angeordnet. In einer bevorzugten Ausführungsform weist jeweils das Bogenablagemittel 705 und das zumindest eine Ablageelement 703 je zumindest einen Antrieb 704; 706 auf. Allerdings sind auch Ausführungsformen vorgesehen in denen jeweils nur das zumindest eine Bogenablagemittel 705 oder das zumindest eine Ablageelement 703 einen Antrieb 704; 706 aufweisen. In der Ausführungsform mit nur zumindest einem Antrieb 704 an dem zumindest einen Ablageelement 703 ist der zumindest eine Antrieb 704 dann nicht mit weiterer Antrieb 704 bezeichnet sondern lediglich mit Antrieb 704. Ausführungsformen mit beiden Kombinationen sind sinnvoll. Beispielsweise findet dann eine Relativbewegung durch das Eigengewicht von Einzelstapeln 602 von Nutzen 03 statt.

Bevorzugt ist der zumindest eine Antrieb 704 und/oder der zumindest eine weitere Antrieb 704 ortsfest und/oder gestellfest angeordnet. Bevorzugt ist der zumindest eine Antrieb 704 und/oder der zumindest eine weitere Antrieb 704 an der zumindest einen Bogenablageeinrichtung 705 gestellfest und/oder ortsfest angeordnet. Der zumindest eine Antrieb 704 und/oder der zumindest eine weitere Antrieb 704 des zumindest einen Ablageelements 703 ist bei Überführung des zumindest einen Bogenablagemittels 705 und/oder des zumindest einen Ablageelements 703 von einer ersten in eine zweite Position in Position bleibend angeordnet. Der zumindest eine Antrieb 704 und/oder der zumindest eine weitere Antrieb 704 ist bei Verstellung des zumindest einen Ablageelements 703 zu dem zumindest einen Bogenablagemittel 705 relativ unbewegt und/oder in Position gehalten. Beispielsweise ist der zumindest eine weitere Antrieb 704 und/oder der zumindest eine Antrieb 704 das zumindest eine Umlenkmittel 707 antreibend angeordnet. In einer weiter bevorzugten Ausführungsform ist das zumindest eine Transportmittel 703, insbesondere das zumindest eine teilweise geradenförmig ausgebildete Transportmittel 703, über zumindest ein Anbindungselement 713 und/oder zumindest ein weiteres Anbindungselement 713 und/oder über zumindest ein weiteres Führungselement 714 und/oder über zumindest eine weitere Linearführung 709 in Wirkverbindung mit zumindest dem zumindest einen weiteren Antrieb 704 und/oder dem zumindest einen Antrieb 704 angeordnet. Bevorzugt weist das zumindest eine Ablageelement 703 ein fest mit dem zumindest einen Ablageelement 703 verbundenes Anbindungselement 713 und/oder weiteres Anbindungselement 713 auf. Das zumindest eine Anbindungselement 713 und/oder das zumindest eine weitere Anbindungselement 713 ist bevorzugt relativ zum zumindest einen Transportmittel 703, insbesondere dem zumindest einen teilweise geradenförmig ausgebildeten Transportmittel 703, fixiert angeordnet. Ein solches Anbindungselement 713 ist beispielsweise als Befestigungsleiste ausgebildet und beispielsweise mittels Schrauben und/oder anderen Befestigungsmitteln an dem zumindest einen Ablageelement 703 befestigt. Das zumindest eine Ablageelement 703 ist mittels eines linear geführten Führungselements 714 und/oder eines weiteren linear geführten Führungselements 714 verstellbar angeordnet ist. Über das zumindest eine, bevorzugt weitere, Führungselement 714 ist das zumindest eine, bevorzugt weitere, Anbindungselement 713 bevorzugt mit zumindest einer, bevorzugt weiteren, Linearführung 709 in Wirkverbindung angeordnet. Insbesondere ist die zumindest eine, bevorzugt weitere, Linearführung 709 zumindest teilweise linear und horizontal geführt ausgebildet. Insbesondere ist das zumindest eine, bevorzugt weitere, Führungselement 714 linear und horizontal verstellbar angeordnet und mit dem zumindest einen, bevorzugt weiteren, Anbindungselement 711 relativ fixiert verbunden. Bevorzugt ist die zumindest eine, bevorzugt weitere, Linearführung 709 als umlaufendes Zugmittel 709 ausgebildet. Das zumindest eine Zugmittel 709 weist bevorzugt zumindest einen teilweise geradenförmigen Verlauf auf. Insbesondere verläuft das zumindest eine Zugmittel 709 in dem zumindest teilweise geradenförmigen Verlauf bevorzugt in einer horizontalen Ebene, parallel zur Ebene, die durch die Transportrichtung T und die Querrichtung A aufgespannt ist. Das zumindest eine, bevorzugt weitere, Führungselement 714 ist bevorzugt auf diesem zumindest einen teilweise geradenförmigen Verlauf angeordnet und insbesondere relativ zur weiteren Linearführung 709 und/oder dem Zugmittel 709 fixiert angeordnet.

Bevorzugt ist das zumindest eine, bevorzugt weitere, Führungselement 714 ausschließlich horizontal verstellbar angeordnet auf dem zumindest einen weiteren Zugmittel 709.

In einer bevorzugten Ausführungsform sind das zumindest eine Transportmittel 703, insbesondere das zumindest eine zumindest teilweise geradenförmig ausgebildete Transportmittel 703, und das zumindest eine Bogenablagemittel 705 relativ zueinander verstellbar angeordnet. Das zumindest eine Bogenablagemittel 703 ist beispielsweise über den zumindest einen Antrieb 706 in oder entgegen der Einfahrrichtung E verstellbar angeordnet. Beispielsweise ist das zumindest eine, insbesondere zumindest teilweise geradenförmig ausgebildete, Transportmittel 703 über eine Kraft in Position haltbar angeordnet und damit relativ zu dem zumindest einen Bogenablagemittel 705 verstellbar angeordnet. Insbesondere ist das zumindest eine, insbesondere zumindest teilweise geradenförmig ausgebildete, Transportmittel 703 und das zumindest eine Bogenablagemittel 705 über eine Lagerung des zumindest einen Umlenkmittels 707 auf dem Bogenablagemittel 705 zumindest teilweise umlaufend und zumindest teilweise relativ verstellbar angeordnet. Eine solche Kraft kann beispielsweise durch einen Stapel 716, insbesondere Zwischenspeicherstapel 716, von Bogen 02 und mehrere Einzelstapel 602 von Nutzen 03 auf das zumindest eine Transportmittel 03 aufbringend angeordnet sein. In einer weiter bevorzugten Ausführungsform ist auch das zumindest eine, insbesondere zumindest teilweise geradenförmig ausgebildete, Transportmittel 703 über den zumindest einen Antrieb 704 und/oder den zumindest einen weiteren Antrieb 704 beispielsweise in Wirkverbindung mit zumindest einem Umlenkmittel 707 und/oder mit einem relativ zum zumindest einen, insbesondere zumindest teilweise geradenförmig ausgebildeten, Transportmittel 703 fixierten weiteren Anbindungselement 713 verstellbar angeordnet. Insbesondere ist das zumindest eine, insbesondere zumindest teilweise geradenförmig ausgebildete, Transportmittel 703 und das zumindest eine Bogenablagemittel 705 so relativ zueinander verstellbar angeordnet.

In einer bevorzugten Ausführungsform ist der zumindest eine Antrieb 706 und der zumindest eine weitere Antrieb 704 mit zumindest einer Welle 731 gekoppelt angeordnet. Insbesondere weist die Welle 731, insbesondere die Koaxialwelle 731, eine koaxiale Anordnung mit einer äußeren Welle und/oder Hülse und einer inneren drehbeweglich gelagerten Welle auf. Der zumindest eine Antrieb 704 und/oder der zumindest eine weitere Antrieb 704 ist beispielsweise mit der inneren Welle gekoppelt angeordnet. Der zumindest eine Antrieb 706 ist beispielsweise mit der äußeren Welle gekoppelt angeordnet. Weiter ist die zumindest eine innere Welle das zumindest eine Zugmittel 709 antreibend angeordnet. Beispielsweise ist die innere Welle stirnseitig aus der äußeren Welle und/oder Hülse heraus ragend angeordnet und ist so das zumindest eine weiter außen angeordnete Zugmittel 709 antreibend angeordnet. Die zumindest eine äußere Welle ist drehbeweglich mittels zumindest eines Lagerung 732 in einem Gestell angeordnet. Insbesondere ist die äußere Welle und/oder Hülse das zumindest eine bevorzugt weitere innen angeordnete Zugmittel 708 antreibend angeordnet. Beispielsweise ist der zumindest eine Antrieb 704 und/oder der zumindest eine weitere Antrieb 704 und der zumindest eine Antrieb 706 mittels zumindest einer Kette mit der äußeren und der inneren Welle gekoppelt angeordnet.

In einer bevorzugten Ausführungsform ist das zumindest eine Bogenablagemittel 705 mittels des Antriebs 706 und das zumindest eine, insbesondere das zumindest teilweise geradenförmig ausgebildete, Transportmittel 703 mittels des zumindest einen Antriebes 704 und/oder des zumindest einen weiteren Antriebs 704 relativ verstellbar angeordnet.

In der bevorzugten Ausführungsform mit einem relativ zum zumindest einen, insbesondere zumindest teilweise geradenförmig ausgebildeten, Transportmittel 703 fixierten weiteren Anbindungselement 713 weist das zumindest eine, insbesondere zumindest teilweise geradenförmig ausgebildete, Transportmittel 703 zumindest einen Bereich 721 auf, der bevorzugt ausschließlich, zumindest weitestgehend, horizontal verstellbar angeordnet ist. Insbesondere ist der zumindest eine Bereich 721 relativ zu dem zumindest einen Bogenablagemittel 705 verstellbar angeordnet. Der zumindest eine Bereich 721 ist insbesondere ein relativ zum zumindest einen, insbesondere zumindest teilweise geradenförmig ausgebildeten, Transportmittel 703 fester Bereich 721. Insbesondere entspricht eine maximale horizontale Verstellung des relativ zum Transportmittel 703 feste Bereichs 721 auf dem Transportmittel 703 zumindest einem Viertel von der Länge l705 des zumindest einen Bogenablagemittels 705.

Die zumindest eine Bogenablageeinrichtung 701 ist in mehrere Positionen verstellbar angeordnet. Beispielsweise ist die zumindest eine Bogenablageeinrichtung 701 zumindest in eine Einfahrposition 723, eine Zwischenspeicherposition 724 und eine Ausfahrposition 726 verstellbar angeordnet. Insbesondere ist die zumindest eine Bogenablageeinrichtung 701 auch in verschiedene Positionen zwischen diesen Position verstellbar angeordnet. Beispielsweise kann die zumindest eine Bogenablageeinrichtung 701 in der Zwischenspeicherposition 724 in einer weiteren Zwischenspeicherposition in und/oder entgegen einer vertikalen Richtung V verstellt werden.

In einer Einfahrposition 723 ist die zumindest eine Bogenablageeinrichtung 701 in dem zumindest einen Bogeneinlageaggregat 700 angeordnet. In einer vertikalen Richtung V über der zumindest einen Bogenablageeinrichtung 701 ist bevorzugt zumindest ein Transportelement 717, weiter bevorzugt zumindest mehrere Transportelemente 717 angeordnet. Bevorzugt sind die mehreren Transportelemente 717 in der Querrichtung A versetzt zueinander, bevorzugt in gleichen Abständen über die Arbeitsbreite, angeordnet. Insbesondere ist das zumindest eine Transportelement 717, insbesondere die mehreren Transportelemente 717 in einer vertikalen Richtung V über der zumindest einen Zwischenbogenkassette 702 angeordnet. Bevorzugt ist in der zumindest einen Zwischenbogenkassette 702 ein Vorratsstapel 718 an Bogen 02 angeordnet. Insbesondere sind die Bogen 02 im Vorratsstapel 718 zur Bogeneinlage, insbesondere Zwischenbogeneinlage, in den Auslagestapel 601 vorgesehen. Bevorzugt ist das zumindest eine Transportelement 717 zur zumindest teilweisen Anhebung eines Bogens 02 aus der zumindest einen Zwischenbogenkassette 702. Insbesondere so angehoben, dass der zumindest angehobene Teil des Bogens 02 in vertikaler Richtung V über der zumindest einen Bogenablageeinrichtung 701 angeordnet ist. Insbesondere ist das zumindest eine Transportelement 717, insbesondere die mehreren Transportelemente 717, als zumindest ein Saugtransportmittel 717, insbesondere als mehrere Saugtransportmittel 717, ausgebildet. Das zumindest eine Saugtransportmittel 717 ist insbesondere als zumindest ein Saugtransportmittel 717 zur zumindest teilweisen Ansaugung eines Bogens 02 aus einem Vorratsstapel 718 der zumindest einen Zwischenbogenkassette 702 ausgebildet.

Insbesondere weist die zumindest eine Bogenablageeinrichtung 701 in einer Einfahrposition 723 zumindest einen relativ zum zumindest einen Transportmittel 703 festen und/oder relativ unbeweglichen und/oder fixierten Bereich 721 auf. Der relativ zum zumindest einen Transportmittel 703 feste Bereich 721 ist relativ zum zumindest einen Bogenablagemittel 705 verstellbar angeordnet. Der zumindest eine Bereich 721 ist insbesondere der Bereich 721 auf dem das zumindest eine weitere Anbindungselement 713 angeordnet ist. Dem zumindest einen Bereich 721 ist zumindest ein weiterer relativ zum zumindest einen Bogenablagemittel 705 fester Bereich 722 angeordnet. Der zumindest eine weitere Bereich 722 ist als Projektion des zumindest einen Bereichs 721 in vertikaler Richtung V auf das zumindest eine Bogenablagemittel 705 gebildet und insbesondere sind beide Bereich 721; 722 in der Einfahrrichtung E übereinander liegend angeordnet. Insbesondere weisen die zumindest zwei Bereiche 721; 722 eine gleiche Flächengröße auf.

Insbesondere ist die zumindest eine Bogenablageeinrichtung 701 von einer Einfahrposition 723 in eine Zwischenspeicherposition 724 überführbar angeordnet. Insbesondere ist die zumindest eine Bogenablageeinrichtung 701 in einer Einfahrrichtung E, vorzugsweise horizontal, verstellt angeordnet.

In der Zwischenspeicherposition 724 sind der zumindest eine relativ zum Transportmittel 703 feste Bereich 721 und der weitere relativ zum Bogenablagemittel 705 feste Bereich 722 auf dem Bogenablagemittel 705 in der Einfahrrichtung E übereinander liegend angeordnet. Insbesondere ist die zumindest eine Bogenablageeinrichtung 701 bevorzugt ohne eine relative Verstellung des zumindest einen Transportmittel 703 zu dem zumindest einen Bogenablagemittel 705 verstellend angeordnet.

Beispielsweise ist die zumindest eine Bogenablageeinrichtung 701 in einer Einfahrposition 723 in einer vertikalen Richtung V unter dem zumindest einen unteren Nutzentrennwerkzeug 503 angeordnet. Das zumindest eine untere Nutzentrennwerkzeug 503 umfasst dabei alle die Raumbereiche 506, zumindest in der horizontalen Richtung, begrenzenden Mittel. Insbesondere zählen dazu Seitenwände, insbesondere Gatter und/oder durchgehende Wände, und/oder Zwischenwände. Unter dem zumindest einen unteren Nutzentrennwerkzeug 503 angeordnet bezeichnet insbesondere eine Anordnung der zumindest einen Bogenablageeinrichtung 701 in der vertikalen Richtung V unter einer dem zumindest einen unteren Nutzentrennwerkzeug zugeordneten Ebene E503. Insbesondere ist die Ebene E503 eine bevorzugt horizontal ausgebildete Ebene. Insbesondere ist als horizontal ausgebildete Ebene eine Ebene bezeichnet, die zumindest weitestgehend parallel zu der durch die Transportrichtung T und die Querrichtung A aufgespannte Ebene ist. Die zumindest eine Ebene E503 ist bevorzugt eine durch die Unterkante des zumindest einen unteren Nutzentrennwerkzeug 503 verlaufende Ebene. Weitere bevorzugt ist die Ebene E503 durch die Fläche der Unterseite des zumindest einen Nutzentrennwerkzeugs 503 verlaufend angeordnet. Insbesondere sind auf der Unterseite, also der in vertikaler Richtung V niedrigsten Seite, mehrere Aussparungen 506 zur Ablage von Einzelstapeln 602 von Nutzen 03 angeordnet. Die Ebene E503 ist beispielsweise durch die Aussparungen 506 nicht beeinflusst angeordnet.lnsbesondere ist damit eine Anordnung unter aller die Stabilität und/oder den Raumbereich der Stapel und/oder der Einzelstapel 602 im unteren Nutzentrennwerkzeug 503 beeinflussenden Mittel bezeichnet. Insbesondere ist die Ebene E503 auch unter seitlichen Stützmitteln und/oder Seitenwänden angeordnet. Insbesondere ist die zumindest eine Bogenablageeinrichtung 701 unter der Ebene E503 angeordnet, so dass diese unabhängig und/oder ohne Limitierung durch das zumindest eine untere Nutzentrennwerkzeug 503 und/oder zugeordnete Elemente verstellt werden kann und/oder verstellbar angeordnet ist.

Weiter ist die zumindest eine Bogenablageeinrichtung 701 in einer vertikalen Richtung V über dem zumindest einen Stapelelement 604, insbesondere dem zumindest einen Auslageelement 604, angeordnet. Mit über dem zumindest einen Stapelelement 604 ist insbesondere eine Anordnung in der vertikalen Richtung V über einer dem zumindest einen Stapelelement 604, insbesondere über dem zumindest einen Auslageelement 604, zugeordneten Ebene E604. Insbesondere ist die Ebene E604 insbesondere eine horizontal angeordnete Ebene E604. Insbesondere ist als horizontal ausgebildete Ebene eine Ebene bezeichnet, die zumindest weitestgehend parallel zur der durch die Transportrichtung T und die Querrichtung A ausgespannte Ebene ist. Die Ebene E604 ist bevorzugt eine Ebene durch eine Oberkante des zumindest einen Stapelelements 604, insbesondere dem zumindest einen Auslageelements 604. Weiter bevorzugt ist die Ebene E604 durch die Fläche der Oberseite des zumindest einen Stapelelements 604, insbesondere des zumindest einen Auflageelements 604, verlaufend angeordnet. Insbesondere ist die Oberseite die Seite des zumindest einen Stapelelements 604 insbesondere die in vertikaler Richtung V am höchsten angeordnete Seite. Auf der Oberseite des zumindest einen Stapelelements 604 sind bevorzugt mehrerer Aussparungen angeordnet. Die Ebene E604 ist beispielsweise durch die Aussparungen nicht beeinflussend angeordnet. Bei Anwesenheit von Nutzen 03 auf dem zumindest einen Auslageelement 604 ist die Ebene E604 bevorzugt durch die Oberkante in vertikaler Richtung V der Nutzen 03 und/oder Einzelstapel 602 von Nutzen verlaufend angeordnet.

Das zumindest eine Bogenablagemittel 705 und das zumindest eine, insbesondere das zumindest teilweise geradenförmig ausgebildete, Transportmittel 703 sind bevorzugt zumindest teilweise parallel zu der Ebene E503 des zumindest einen unteren Nutzentrennwerkzeugs 503 und parallel zu einer Ebene E604 des zumindest einen Stapelelements 604, insbesondere des zumindest einen Auslageelements 604, angeordnet. Die zumindest eine Bogenablageeinrichtung 701 ist in der Zwischenspeicherposition 724 bevorzugt in der vertikalen Richtung V zwischen einer Ebene E503 des zumindest einen Nutzentrennwerkzeugs 503 und der Ebene E604 des zumindest einen Auslageelements 604 angeordnet.

Die zumindest einen Bogenablageeinrichtung 701 ist bevorzugt von einer Zwischenspeicherposition 724 in eine Ausfahrposition 726 überführbar angeordnet. Insbesondere ist die zumindest eine Bogenablageeinrichtung 701 entgegen der Einfahrrichtung E verstellt angeordnet. Bevorzugt ist die zumindest eine Bogenablageeinrichtung 701 von zumindest einem Aggregat 500 in das zumindest eine Bogeneinlageaggregat 700 überführbar angeordnet. Insbesondere ist das zumindest eine, insbesondere zumindest teilweise geradenförmig ausgebildete, Transportmittel 703 und das zumindest eine Bogenablagemittel 705 relativ zueinander verstellt angeordnet.

Insbesondere ist die zumindest eine Bogenablageeinrichtung 701 in der Ausfahrposition 726 räumlich in dem Bogeneinlageaggregat 700 angeordnet. Mit räumlich ist insbesondere nicht nur eine parallel Anordnung zu verstehen, sondern auch in der vertikalen Richtung V zumindest überlappenden Anordnung der Komponenten. In der vertikalen Richtung V ist die zumindest eine Bogeneinlageeinrichtung 701 über der Zwischenbogenkassette 702 angeordnet. Weiter ist die zumindest eine Bogeneinlageeinrichtung 701 in der vertikalen Richtung V unter dem zumindest einen, bevorzugt mehreren, Transportelementen 717 angeordnet.

Insbesondere sind in der Ausfahrposition 726 der relativ zum, insbesondere zum zumindest teilweise geradenförmig ausgebildeten, Transportmittel 703 feste Bereich 721 und der weitere relativ zum Bogenablagemittel 705 feste Bereich 722 in der Einfahrrichtung E versetzt zueinander angeordnet. Bei der Überführung von der Zwischenspeicherposition 724 in die Ausfahrposition 726 ist der zumindest eine relativ zum Transportmittel 703 feste Bereich 721 relativ zum Bogenablagemittel 705 feste Bereich 722 fixiert angeordnet.

Weiter ist die zumindest eine Bogenablageeinrichtung 701 von einer Ausfahrposition 726 in eine Einfahrposition 723 überführbar angeordnet. Insbesondere ist die zumindest eine Bogenablageeinrichtung 701 bei Überführung von der Ausfahrposition 726 in die Einfahrposition 723 in Position gehalten angeordnet. Insbesondere ist die zumindest eine Bogenablageeinrichtung 701 in der Ausfahrposition 726 und in der Einfahrposition 723 in dem zumindest einen Bogeneinlageaggregat 700 angeordnet. Insbesondere ist das zumindest eine Transportmittel 703 und das zumindest eine Bogenablagemittel 705 von einer versetzt angeordneten Position in einer Einfahrrichtung E übereinanderliegenden Position angeordnet.

Um die zumindest eine Bogenablageeinrichtung 701 zwischen den Positionen zu verstellen, laufen mehrere Schritte ab. Insbesondere umfasst das Verfahren zur Bogenablage die Schritte des Einfahrens der zumindest einen Bogenablageeinrichtung 701 in einer Einfahrrichtung E von einer Einfahrposition 723 in eine Zwischenspeicherposition 724, Ausfahren von einer Zwischenspeicherposition 724 in eine Ausfahrposition 726 entgegen der Einfahrrichtung E und Rückstellen des zumindest einen Ablageelement 703, insbesondere des zumindest einen Transportmittels 703, von einer Ausfahrposition 726 in eine Einfahrposition 723.

Insbesondere ist das zumindest eine Transportmittel 703 und das zumindest eine Bogenablagemittel 705 insbesondere ohne eine Relativbewegung zu einem auf der zumindest einen Bogenablageeinrichtung 701 liegenden Bogen 02 verstellend angeordnet.

In einem Einfahrschritt wird die zumindest eine Bogenablageeinrichtung 701 in der Einfahrrichtung E von der Einfahrposition 723 in die Zwischenspeicherposition 724 verstellt. Insbesondere wird die zumindest eine Bogenablageeinrichtung 701 von dem zumindest einen Bogeneinlageaggregat 700 in das zumindest eine weitere Aggregat 500, insbesondere in das zumindest eine Nutzentrennaggregat 500, verstellt. Insbesondere wird der relativ zum Transportmittel 703 feste Bereich 721 und der weitere relativ zum Bogenablagemittel 705 feste Bereich 722 in der Einfahrrichtung E übereinander liegend, bevorzugt gleichmäßig, verstellt. Insbesondere findet zwischen dem zumindest einen, insbesondere dem zumindest teilweise geradenförmig ausgebildeten, Transportmittel 703 und dem zumindest eine Bogenablagemittel 705 im Einfahrschritt keine relative Bewegung statt. Bevorzugt ist in dem Einfahrschritt ein Bogen 02, insbesondere ein Bogen 02 zur Zwischenbogeneinlage, auf der zumindest einen Bogenablageeinrichtung 701 liegend angeordnet.

In dem Ausfahrschritt wird die zumindest eine Bogenablageeinrichtung 701 entgegen der Einfahrrichtung E von der Zwischenspeicherposition 724 in die Ausfahrposition 726 verstellt. Insbesondere findet im Ausfahrschritt eine relative Bewegung zwischen dem zumindest einen Ablageelement 703, insbesondere dem zumindest teilweise geradenförmig ausgebildeten Transportmittel 703, und dem zumindest einen Bogenablagemittel 705 statt. Insbesondere wird die zumindest eine Bogenablageeinrichtung 701 von dem zumindest eine Aggregat 500, insbesondere dem zumindest einen Nutzentrennaggregat 500, in das zumindest eine Bogeneinlageaggregat 700 überführt. Insbesondere findet eine relative Bewegung zwischen einem relativ zum zumindest teilweise geradeförmig ausgebildeten Transportmittel 703 feste Bereich 721 und dem weiteren relativ zum Bogenablagemittel 705 feste Bereich 722 statt. Insbesondere wird das zumindest eine Bogenablagemittel 705 durch den zumindest einen Antrieb 706 entgegen der Einfahrrichtung E verstellt. Insbesondere wird das zumindest einen Bogenablagemittel 705 über das zumindest eine Anbindungselement 711, das zumindest eine Führungselement 712 und die zumindest eine Linearführung 708 in der Einfahrrichtung E verstellt. Der relativ zum zumindest einen Bogenablagemittel 705 feste Bereich 722 auf dem zumindest einen Bogenablagemittel 705 wird im Ausfahrschritt in der Einfahrrichtung E verstellt. Weiter wird der relativ zum zumindest einen Bogenablagemittel 705 feste Bereich 722 relativ zum, insbesondere zumindest teilweise geradenförmig ausgebildeten, Transportmittel 703 festen Bereich 721 verstellt. Das zumindest eine, insbesondere zumindest teilweise geradenförmig ausgebildete, Transportmittel 703 wird im Ausfahrschritt fixiert und insbesondere in der Position gehalten. Bevorzugt wird das, insbesondere zumindest teilweise geradenförmig ausgebildete, Transportmittel 703 über das zumindest eine weitere Anbindungselement 711 und das zumindest eine weitere Führungselement 712 und die zumindest eine Linearführung 709 und den zumindest einen weiteren Antrieb 704 und/oder den zumindest einen Antrieb 704 in Position gehalten. Insbesondere wird der relativ zum, insbesondere zumindest teilweise geradenförmig ausgebildeten, Transportmittel 703 feste Bereich 721 in dem Ausfahrschritt in Position bezüglich der Einfahrrichtung E gehalten.

In der Ausfahrposition 726 sind der zumindest eine relativ zum, insbesondere zumindest teilweise geradenförmig ausgebildete, Transportmittel 703 feste Bereich 721 und der relativ zum Bogenablagemittel 705 feste Bereich 722 zueinander in der Einfahrrichtung E versetzt angeordnet. In einem Rückstellschritt werden das zumindest eine Bogenablagemittel 705 und das zumindest eine teilweise geradenförmigen Transportmittel 703 relativ zueinander verstellt. In einem Rückstellschritt wird der zumindest eine relativ zum zumindest einen, insbesondere zumindest teilweise geradenförmig ausgebildeten, Transportmittel 703 feste Bereich 721 relativ zu dem relativ zu dem zumindest einen Bogenablagemittel 705 festen Bereich 722 auf dem zumindest einen Bogenablagemittel 705 verstellt. Insbesondere so versteht, dass die beiden Bereiche 721; 722 wieder aufeinander liegend, bevorzugt deckend in der vertikalen Richtung V, angeordnet sind. Insbesondere wird das zumindest eine, insbesondere zumindest teilweise geradenförmig ausgebildete, Transportmittel 703 mittels des zumindest einen Antriebes 704 und/oder des zumindest einen weiteren Antriebes 704 verstellt. Bevorzugt findet zumindest im Einfahrschritt und zumindest im Rückstellschritt eine Verstellung des zumindest einen zumindest teilweise geradenförmigen ausgebildeten Transportmittels 703 durch zumindest einen Antrieb 704 und/oder den zumindest einen weiteren Antrieb 704 statt. Das zumindest eine Bogenablagemittel 705 bleibt in Position. Insbesondere wird die Position der zumindest einen Bogenablageeinrichtung 701 in Einfahrrichtung E nicht geändert. Insbesondere findet zumindest im Einfahrschritt und im Ausfahrschritt eine Bewegung des zumindest einen Bogenablagemittels 701 durch den zumindest einen Antrieb 706 statt.

Die zumindest eine Bogenablageeinrichtung 701 ist zumindest in einer vertikalen Richtung V relativ zu dem zumindest einen unteren Nutzentrennwerkzeug 503 mittels einer Hubvorrichtung 720 verstellbar angeordnet. Insbesondere ist die zumindest eine Bogenablageeinrichtung 701 bevorzugt in der Zwischenspeicherposition 724 unter dem zumindest einen Nutzentrennwerk 501 und weiter bevorzugt unter dem zumindest einen unteren Nutzentrennwerkzeug 503 angeordnet. Insbesondere ist die zumindest eine Bogenablageeinrichtung 701 bevorzugt in Kontakt oder mit einem Abstand unter dem unteren Nutzentrennwerkzeug 503 angeordnet. Insbesondere ist ein kleinster Abstand zwischen einer Ebene E701 der zumindest einen Bogenablageeinrichtung 701 und dem unteren Nutzentrennwerkzeug 503, insbesondere der Ebene E503, in der Zwischenspeicherposition 724 kleiner 20 cm (zwanzig Zentimeter), bevorzugt kleiner 10 cm (zehn Zentimeter). Die Ebene E701 ist bevorzugt eine Ebene E701, die bevorzugt horizontal angeordnet ist. Insbesondere ist die Ebene E701 durch die in vertikaler Richtung V oberste Fläche, beispielsweise eine Ausgleichsfläche der obersten Fläche, der zumindest einen Bogenablageeinrichtung 701, beispielsweise durch die Auflagefläche 719, angeordnet. Die zumindest eine Bogenablageeinrichtung 701 ist den Raumbereich 506 des zumindest einen unteren Nutzentrennwerkzeugs 503 in vertikaler Richtung V nach unten begrenzend angeordnet und/oder begrenzt den Raumbereich 506 nach unten. Insbesondere ist die zumindest eine Bogenablageeinrichtung 701 den Raumbereich mit vorgebend angeordnet und insbesondere von allen Elementen und/oder Mitteln des unteren Nutzentrennwerkzeugs 503 beabstandet angeordnet.

Die zumindest eine Bogenablageeinrichtung 701 ist von einer Zwischenspeicherposition 724 in eine weitere Zwischenspeicherposition verstellbar angeordnet. In der weiteren Zwischenspeicherposition weist die zumindest eine Bogenablageeinrichtung 701 bevorzugt eine höhere Zwischenspeicherkapazität auf. In der weiteren Zwischenspeicherposition ist die zumindest eine Bogenablageeinrichtung 701 in der vertikalen Richtung V nach unten verstellt angeordnet. Insbesondere ist ein Raumbereich 506 des zumindest einen unteren Nutzentrennwerkzeugs 503 in der weiteren Zwischenspeicherposition mit erhöhter Zwischenspeicherkapazität vergrößert angeordnet.

Die Ebene E701 der zumindest einen Bogenablageeinrichtung 70 weist in der Zwischenspeicherposition 724 einen ersten Abstand zu der Ebene E503 auf. Die Ebene E701 der zumindest Bogenablageeinrichtung 701 ist in der weiteren Zwischenspeicherposition mit einem vergrößerten Abstand zur Ebene E503 des zumindest einen unteren Nutzentrennwerkzeug 503 angeordnet.

Insbesondere ist eine maximale Zwischenspeicherkapazität zur Zwischenspeicherung der Nutzen 03 und/oder der Einzelstapel 602 von Nutzen 03 vergrößert. Insbesondere ist in der Ausführungsform in der weiteren Zwischenspeicherposition mit erhöhter Zwischenspeicherkapazität die zumindest eine Bogenablageeinrichtung 701 direkt von der weiteren Zwischenspeicherposition in die Ausfahrposition 726 verstellbar angeordnet. In einer bevorzugten Ausführungsform ist die zumindest eine Zwischenbogenkassette 702 und das zumindest eine Transportelement 717 durch die zumindest Hubvorrichtung 720 in vertikaler Richtung V, bevorzugt in gleichem Maße wie die zumindest eine Bogenablageeinrichtung 701, verstellbar und/oder verstellt angeordnet.

Das zumindest eine Stapelelement 604, insbesondere das zumindest eine Auslageelement 604 ist in einer vertikalen Richtung V durch eine weitere Hubvorrichtung 603 verstellbar angeordnet. In einer vertikalen Richtung V ist die zumindest eine Bogenablageeinrichtung 701 über dem zumindest einen Stapelelement 604 und/oder über dem zumindest einen Auslagestapel 601 angeordnet. In einer bevorzugten Ausführungsform ist das zumindest eine Stapelelement 604 und/oder das zumindest eine Auslageelement 604 und/oder der zumindest eine Auslagestapel 601 vor einem Ausfahrschritt mit einem Abstand zu der zumindest einen Bogenablageeinrichtung 701 angeordnet. Bevorzugt ist der geringste Abstand zu zumindest einem Auslagestapel 601 oder der geringste Abstand zu zumindest einem Stapelelement 604, kleiner als 20 cm (zwanzig Zentimeter), weiter bevorzugt kleiner als 10 cm (zehn Zentimeter) und noch weiter bevorzugt kleiner als 4 cm (vier Zentimeter).

In der Ausführungsform in der die zumindest eine Bogenablageeinrichtung 701 in der weiteren Zwischenspeicherposition angeordnet ist, ist das zumindest eine Stapelelement 604 und/oder das zumindest eine Auslageelement 604 und/oder der zumindest eine Auslagestapel 601 vor einem Ausfahrschritt mit einem Abstand zu der zumindest einen Bogenablageeinrichtung 701 angeordnet. Insbesondere ist der geringste Abstand der zumindest einen Bogenablageeinrichtung 701 in der weiteren Zwischenspeicherposition zu zumindest einem Auslagestapel 601 oder ein geringster Abstand zu zumindest einem Stapelelement 604 und insbesondere zur Ebene E604, kleiner als 20 cm (zwanzig Zentimeter), weiter bevorzugt kleiner 10 cm (zehn Zentimeter) und noch weitere bevorzugt kleiner als 4 cm (vier Zentimeter).

Insbesondere ist dem zumindest einen Stapelelement 604, insbesondere dem zumindest einen Auslageelement 604, zumindest ein, bevorzugt mehrere, Sensoren zugeordnet angeordnet. Insbesondere ist das zumindest eine Stapelelement 604 steuerungs-und/oder regelungstechnisch mit dem zumindest einen Sensor in Wirkverbindung angeordnet. Insbesondere ist der zumindest einen in Wirkverbindung stehende Sensor so angeordnet, dass der Abstand des zumindest einen Stapelelements 604 und/oder des Auslagestapels 601 zu der zumindest einen Bogenablageeinrichtung 701 steuer-und/oder regelbar ist. Insbesondere ist das zumindest eine Stapelelement 604 in vertikaler Richtung V in Abhängigkeit von der Position der zumindest einen Bogenablageeinrichtung 701 verstellbar angeordnet. Insbesondere ist eine Höhe eines Stapels 601 des zumindest einen Stapelelements 604 durch zumindest einen Sensor erfassbar.

In einer Ausführungsform weist die zumindest eine Bogenablageeinrichtung 701 zumindest einen weiteren Sensor, bevorzugt mehrere weitere Sensoren, in Wirkverbindung stehend auf. Insbesondere ist durch den zumindest einen weiteren Sensor die Position der zumindest einen Bogenablageeinrichtung 701 in vertikaler Richtung V erfassbar. Insbesondere ist der zumindest eine weiteren Sensor so angeordnet, dass ein Füllstand des zumindest einen Raumbereichs 506 des zumindest einen unteren Nutzentrennwerkzeugs 503 detektiert und/oder erfasst werden kann. Insbesondere ist die zumindest eine Bogenablageeinrichtung 701 in Abhängigkeit von einem Füllstand des Raumbereichs 506 in vertikaler Richtung V verstellbar angeordnet. Insbesondere ausgehend vom Füllstand des Raumbereichs 506 des zumindest einen unteren Nutzentrennwerkzeugs 503 wird die zumindest eine Bogenablageeinrichtung 701 in der vertikalen Richtung V verstellt.

In einer weiteren Ausführungsform wird ein Abstand zwischen dem unteren Nutzentrennwerkzeug 503 und der zumindest einen Bogenablageeinrichtung 701 vor einem Ausfahrschritt vergrößert.

In einem Verfahren zur Bogenablage ist eine Ebene E701 zumindest einer Bogenablageeinrichtung 701 in der vertikalen Richtung V, zumindest in der Zwischenspeicherposition 724, unter einer Ebene E503 zumindest eines unteren Nutzentrennwerkzeugs 503 angeordnet. Insbesondere wird ein Abstand zwischen der Ebene E701 und der Ebene E503 durch ein Verstellen in vertikaler Richtung V der zumindest einen Bogenablageeinrichtung 701 relativ zum unteren Nutzentrennwerkzeug 503 vergrößert. Insbesondere wird die zumindest eine Bogenablageeinrichtung 701 zur Erhöhung der Zwischenspeicherkapazität in einer vertikalen Richtung V verstellt. Insbesondere wird die zumindest einen Bogenablageeinrichtung 701 von der Zwischenspeicherposition 724 in eine weitere Zwischenspeicherposition mit erhöhter Zwischenspeicherkapazität überführt. Die zumindest eine Bogenablageeinrichtung 701 wird in der vertikalen Richtung V nach unten insbesondere entgegen der vertikalen Richtung V verstellt, so dass die zumindest eine Bogenablageeinrichtung 701 von dem zumindest einen unteren Nutzentrennwerkzeug 503 beabstandet ist. Insbesondere wird ein Abstand von dem zumindest einen unteren Nutzentrennwerkzeug 503 und/oder dem zumindest einen Nutzentrennwerk 501 vergrößert. Insbesondere wird der Raumbereich 506 des zumindest einen unteren Nutzentrennwerkzeugs 503 durch die Verstellung entgegen der vertikaler Richtung V der zumindest einen Bogenablageeinrichtung 701 vergrößert.

Insbesondere wird das zumindest eine Stapelelement 604 und/oder der zumindest eine Auslagestapel 601 an die zumindest eine Bogenablageeinrichtung 701 in vertikaler Richtung V angepasst. Insbesondere wird das zumindest eine Stapelelement 604 und/oder der zumindest eine Auslagestapel 601 so angepasst, dass ein Abstand des zumindest einen Stapelelements 604 und dem zumindest einen Auslagestapel 601 zur zumindest einen Bogenablageeinrichtung 701 gleich bleibt. Insbesondere ist ein Abstand zumindest vor einem Ausfahrschritt der zumindest einen Bogenablageeinrichtung 701 zum dem zumindest einen Stapelelement 604 und/oder dem zumindest einen Auslagestapel 601 und/oder bevorzugt der Ebene E604 klein, insbesondere kleiner als 20 cm (zwanzig Zentimeter, weiter bevorzugt kleiner als 10 cm (zehn Zentimeter) und noch weiter bevorzugt kleiner als 4 cm (vier Zentimeter).

Insbesondere wird der Abstand zwischen der zumindest einen Bogenablageeinrichtung 701 und dem zumindest einen Stapelelement 604 und/oder dem zumindest einen Auslagestapel 601 mittels dem zumindest einen Sensor erfasst und durch ein Signal mittels der zumindest einen Hubvorrichtung 603 angepasst. Insbesondere wird zumindest bei Erreichen eines maximalen Füllstandes des zumindest einen Raumbereichs 506 des zumindest einen unteren Nutzentrennwerkzeugs 503 die zumindest eine Bogenablageeinrichtung 701 entgegen der vertikalen Richtung V verstellt.

Im Folgenden wird das Verfahren und die Bogenbearbeitungsmaschine 01 im Betrieb mit zumindest einem Bogen 02 beschrieben. Insbesondere werden dazu die einzelnen Positionen und Schritte beschrieben.

In der Einfahrposition 723 und/oder dem Einfahrschritt liegt bevorzugt zumindest ein, bevorzugt unbearbeiteter, Bogen 02 auf der zumindest einen Bogenablageeinrichtung 701. Bevorzugt ist der zumindest eine Bogen 02 aus der zumindest einen Zwischenbogenkassette 702 entnommen und mittels des zumindest einen Transportelements 717 auf die zumindest eine Bogenablageeinrichtung 701 angehoben und abgelegt.

Insbesondere wird die zumindest eine Bogenablageeinrichtung 701 mit dem Einfahrschritt in die Zwischenspeicherposition 724 verstellt. In der Zwischenspeicherposition 724 werden auf dem bevorzugt einen Bogen 02 mehrere Nutzen 03, insbesondere mehrere Einzelstapel 602 von Nutzen 03, auf der zumindest einen Bogenablageeinrichtung 701 gestapelt insbesondere zwischengestapelt. Insbesondere werden die Nutzen 03 durch das Nutzentrennwerk 501 von zumindest einem Reststück 05; 06 getrennt und auf der zumindest einen Bogenablageeinrichtung 701 in der Zwischenspeicherposition 724 auf zumindest einem Zwischenspeicherstapel 716 zwischengespeichert und/oder gestapelt. Insbesondere werden die Nutzen 03 und der Bogen 02 in dem zumindest einen Raumbereich 506 des zumindest einen unteren Nutzentrennwerkzeugs 503 zwischengespeichert. Insbesondere ist über den Raumbereich 506 des zumindest einen unteren Nutzentrennwerkzeug 503 eine maximale Zwischenspeicherkapazität der Nutzen 03 und/oder der Einzelstapel 602 vorgegeben.

Beispielsweise bei Erreichen eines maximalen Füllstandes des zumindest einen Raumbereichs 506 des zumindest einen unteren Nutzentrennwerkzeugs 503 wird die zumindest eine Bogenablageeinrichtung 701 in der vertikalen Richtung V verstellt. Insbesondere über den zumindest den Füllstand des Raumbereichs 506 erfassenden Sensor wird die zumindest eine Bogenablageeinrichtung 701 bei Bedarf mittels der zumindest einen Hubvorrichtung 720 in vertikaler Richtung V verstellt. Insbesondere wird ein Abstand zwischen der zumindest einen Bogenablageeinrichtung 701 und dem zumindest einen unteren Nutzentrennwerkzeugs 503 so vergrößert, dass mehrere Nutzen 03 und/oder Einzelstapel 602 von Nutzen 03 in den Raumbereich 506 passen. Wenn Bogen 02 und/oder mehrere Einzelstapel 604 von Nutzen 03 als Auslagestapel 601 auf dem zumindest einen Stapelelement 604, insbesondere dem zumindest einen Auslageelement 604, liegen wird der geringste Abstand zwischen dem Auslagestapel 604 und der zumindest einen Bogenablageeinrichtung 701 aufeinander angepasst. Sonst wird der Abstand zwischen dem zumindest einen Stapelelement 604 und der zumindest einen Bogenablageeinrichtung 701 angepasst. Insbesondere wird dieser Abstand vor dem Ausfahrschritt so angepasst, dass der Abstand klein ist, insbesondere kleiner als 20 cm (zwanzig Zentimeter), weiter bevorzugt kleiner als 10 cm (zehn Zentimeter) und noch weiter bevorzugt kleiner als 4 cm (vier Zentimeter). Insbesondere werden in dem Ausfahrschritt die zwischengespeicherten Bogen 02 und/oder Einzelstapel 602 an Nutzen 03 auf dem zumindest einen Auslagestapel 601 und/oder dem zumindest einen Stapelelement 604 abgelegt.

Zur Erhöhung der Zwischenspeicherkapazität im Zwischenspeicherschritt wird ein Abstand der Ebene E703 des zumindest einen Transportbandes 703 von der Ebene E503 des zumindest einen unteren Nutzentrennwerkzeug 503 vergrößert. Insbesondere wird dazu die zumindest eine Bogenablageeinrichtung 701 in vertikaler Richtung V verschoben.

Vor einem Ausfahrschritt wird durch das zumindest eine Saugtransportmittel 717 ein Bogen 02 zumindest teilweise in der vertikalen Richtung V von dem zumindest einen Vorratsstapel 718 der zumindest einen Zwischenbogenkassette 702 angehoben. Insbesondere zumindest so weit angehoben, dass sich der zumindest eine Bogen 02 zumindest teilweise über der zumindest einen Bogenablageeinrichtung 701 befindet. Insbesondere wird der Bogen 02 durch das zumindest eine Transportelement 717 auf eine Ebene in der vertikalen Richtung V über eine E703 des zumindest einen Transportmittels 703 angehoben.

In einem Ausfahrschritt wird der Zwischenspeicherstapel 716 von der zumindest einen Bogenablageeinrichtung 701 auf das zumindest eine Stapelelement 604, insbesondere das zumindest eine Auslageelement 604 abgelegt. Insbesondere findet in dem Ausfahrschritt kaum oder keine Relativbewegung zwischen dem zumindest einen Zwischenspeicherstapel 716 und dem zumindest einen, insbesondere zumindest teilweise geradenförmig ausgebildeten, Transportmittel 703 statt.

In der bevorzugten Ausführungsform mit einen Rückstellschritt wird der zumindest eine Bogen 02 zumindest so lange von dem zumindest einen Saugtransportmittel 717 gehalten bis ein Rückstellschritt abgeschlossen ist. Insbesondere wird der zumindest eine Bogen 02 dann nach dem Rückstellschritt, insbesondere in oder kurz vor der Einfahrposition 723, auf der zumindest einen Bogenablageeinrichtung 701 abgelegt.

### Bezugszeichenliste

- 01: Bearbeitungsmaschine, Bogenbearbeitungsmaschine, Stanzmaschine, Flachbettstanzmaschine
- 02: Substrat, Bogen
- 03: Nutzen
- 04: Reststück, erstes, Abfallstück
- 05: Reststück, Steg
- 06: Reststück, zweites, Greiferkante
- 07: Kante, Vorderkante
- 08: Kante, Hinterkante
- 09: Kante, Seitenkante
- 10: -
- 11: Druckmarke

- 100: Aggregat, Anlegeraggregat, Anleger, Bogenanleger, Bogenanlegeraggregat

- 200: Aggregat, Anlageaggregat

- 300: Aggregat, Formgebungsaggregat, Stanzaggregat, Rillaggregat, Schneidaggregat, Stanze, Flachbettstanzaggregat, Flachbettstanze
- 301: Formgebungswerk, Stanzwerk, Flachbettstanzwerk

- 400: Aggregat, Ausbrechaggregat
- 401: Ausbrechwerk

- 500: Aggregat, Nutzentrennaggregat
- 501: Nutzentrennwerk
- 502: Nutzentrennwerkzeug, oberes
- 503: Nutzentrennwerkzeug, unteres
- 504: Drückeinrichtung, Erhöhung (501)
- 505: -
- 506: Raumbereich, Zwischenspeicherung, Aussparung (502)

- 600: Aggregat, Auslageaggregat, Auslage
- 601: Stapels, Auslagestapel
- 602: Einzelstapel
- 603: Hubvorrichtung
- 604: Stapelelement, Auslageelement

- 650: Aggregat, gemeinsam (500; 600)

- 700: Aggregat, Bogeneinlageaggregat
- 701: Bogenablageeinrichtung
- 702: Bogenkassette, Zwischenbogenkassette
- 703: Ablageelement, Transportmittel, Transportband
- 704: Antrieb, weiterer (703)
- 705: Bogenablagemittel
- 706: Antrieb (705)
- 707: Umlenkmittel, Walze (703)
- 708: Linearführung (705), Zugmittel
- 709: Linearführung (703), weitere, Zugmittel
- 710: -
- 711: Anbindungselement (705)
- 712: Führungselement (705)
- 713: Anbindungselement, weiteres (703)
- 714: Führungselement, weiteres (703)
- 715: -
- 716: Stapel, Zwischenspeicherstapel
- 717: Transportelement, Saugtransportmittel
- 718: Vorratsstapel
- 719: Auflagefläche (703)
- 720: Hubvorrichtung (701)
- 721: Bereich (703)
- 722: Bereich, weiterer (705)
- 723: Einfahrposition
- 724: Zwischenspeicherposition
- 725: -
- 726: Ausfahrposition
- 727: -
- 728: Fläche, Kontaktfläche (703)
- 729: Fläche, Tragfläche (705)
- 730: -
- 731: Welle, Koaxialwelle
- 732: Lagerung (731)

- 800: Aggregat, Reststückauslageaggregat

- 900: Aggregat, gemeinsam (700; 800)

- 1000: System, Antriebssystem

- 1100: System, Steuerungssystem

- 1200: System, Transportsystem, Kettentransportsystem, Kettengreifersystem
- 1201: Wagen, Greiferwagen, Kettengreiferwagen
- 1202: Halteelement, Greifer
- 1203: Führungseinrichtung, Kette

- A: Richtung, Querrichtung, horizontal
- E: Einfahrrichtung
- T: Richtung, Transportrichtung, horizontal
- V: Richtung, vertikal

- a604: Fläche
- a705: Fläche

- I604: Länge
- I703: Länge
- I705: Länge

- E503: Ebene
- E604: Ebene
- E701: Ebene
- E703: Ebene

## Patentansprüche

1. Bogenbearbeitungsmaschine (01) mit zumindest einer Bogenablageeinrichtung (701) und mit zumindest einem unteren Nutzentrennwerkzeug (503), wobei die zumindest eine Bogenablageeinrichtung (701) zumindest in einer Einfahrrichtung (E) verstellbar angeordnet ist, wobei die zumindest eine Bogenablageeinrichtung (701) eine Ebene (E701) aufweist, wobei die zumindest eine Bogenablageeinrichtung (701) zumindest in einer vertikalen Richtung (V) relativ zu dem zumindest einen unteren Nutzentrennwerkzeug (503) mittels einer Hubvorrichtung (720) verstellbar angeordnet ist, wobei zumindest die Ebene (E701) in einer Zwischenspeicherposition (724) in einer vertikalen Richtung (V) unter einer Ebene (E503) des unteren Nutzentrennwerkzeugs (503) angeordnet ist, wobei die Ebene (E503) des unteren Nutzentrennwerkzeuges (503) unter aller die Aussparungen und/oder einen Raumbereich (506) der Einzelstapel (602) und/oder der Stapel im unteren Nutzentrennwerkzeug (503) begrenzenden Mitteln angeordnet ist, und wobei die Ebene (E701) der zumindest einen Bogenablageeinrichtung (701) in der Zwischenspeicherposition (724) einen ersten Abstand zu der Ebene (E503) des unteren Nutzentrennwerkzeuges (503) aufweist,
**dadurch gekennzeichnet,**
**dass** die zumindest eine Bogenablageeinrichtung (701) von einer Zwischenspeicherposition (724) in eine weitere Zwischenspeicherposition in vertikaler Richtung (V) verstellbar angeordnet ist, und dass die Ebene (E701) der zumindest einen Bogenablageeinrichtung (701) in der weiteren Zwischenspeicherposition mit einem vergrößerten Abstand zur Ebene (E503) des unteren Nutzentrennwerkzeuges (503) angeordnet ist.

2. Bogenbearbeitungsmaschine nach Anspruch 1, **dadurch gekennzeichnet, dass** die zumindest eine Bogenablageeinrichtung (701) zur Erhöhung der Zwischenspeicherkapazität von der Zwischenspeicherposition (724) in die weitere Zwischenspeicherposition in vertikaler Richtung (V) verstellbar angeordnet ist.

3. Bogenbearbeitungsmaschine nach Anspruch 1 oder 2, **dadurch gekennzeichnet, dass** die zumindest eine Bogenablageeinrichtung (701) einen Raumbereich (506) des zumindest einen unteren Nutzentrennwerkzeugs (503) in vertikaler Richtung (V) nach unten begrenzend angeordnet ist und dass die zumindest eine Bogenablageeinrichtung (701) einen Sensor und/oder einen weiteren Sensor zur Erfassung des Füllstandes des Raumbereichs (506) des unteren Nutzentrennwerkzeuges (703) aufweist.

4. Bogenbearbeitungsmaschine nach Anspruch 1 oder 2 oder 3, **dadurch gekennzeichnet, dass** die Position der zumindest einen Bogenablageeinrichtung (701) in vertikaler Richtung (V) durch zumindest einen Sensor erfassbar ist.

5. Bogenbearbeitungsmaschine nach Anspruch 1 oder 2 oder 3 oder 4, **dadurch gekennzeichnet, dass** die zumindest eine Bogenablageeinrichtung (701) in einer vertikalen Richtung (V) über zumindest einem Stapelelement (604) und zumindest einem Auslagestapel (601) angeordnet ist und dass das zumindest eine Stapelelement (604) in vertikaler Richtung (V) durch eine weitere Hubvorrichtung (603) verstellbar angeordnet ist und dass das zumindest eine Stapelelement (604) in vertikaler Richtung (V) in Abhängigkeit von der Position der zumindest einen Bogenablageeinrichtung (701) verstellbar angeordnet ist.

6. Bogenbearbeitungsmaschine nach Anspruch 4 und 5, **dadurch gekennzeichnet, dass** eine Höhe eines Stapels (601) des zumindest einen Stapelelements (604) durch zumindest einen weiteren Sensor erfassbar ist und dass das zumindest eine Stapelelement (604) in einer vertikalen Richtung (V) auf die Position der zumindest einen Bogenablageeinrichtung (701) verstellbar angeordnet ist.

7. Bogenbearbeitungsmaschine nach Anspruch 3 oder 4 oder 5 oder 6, **dadurch gekennzeichnet, dass** die zumindest eine Bogenablageeinrichtung (701) in Abhängigkeit von einem Füllstand des Raumbereichs (506) in vertikaler Richtung (V) verstellbar angeordnet ist.

8. Bogenbearbeitungsmaschine nach Anspruch 1 oder 2 oder 3 oder 4 oder 5 oder 6 oder 7, **dadurch gekennzeichnet, dass** die zumindest eine Bogenablageeinrichtung (701) ein relativ zu dem zumindest einen Bogenablagemittel (705) verstellbares Ablageelement (703) umfasst.

9. Bogenbearbeitungsmaschine nach Anspruch 8, **dadurch gekennzeichnet, dass** das zumindest eine Ablageelement (703) als zumindest ein zumindest teilweise geradenförmig ausgebildetes Transportmittel (703) ausgebildet ist und dassdie zumindest eine Bogenablageeinrichtung (701) mittels eines Antriebs (706) zumindest horizontal verstellbar angeordnet ist und dass das zumindest eine zumindest teilweise geradenförmig ausgebildete Transportmittel (703) mittels eines weiteren Antriebs (704) relativ verstellbar angeordnet ist.

10. Bogenbearbeitungsmaschine 8 oder 9, **dadurch gekennzeichnet, dass** das zumindest eine Ablageelement (703) und das zumindest eine Bogenablagemittel (705) mittels einer Koaxialwelle (731) angetrieben werden.

11. Verfahren zur Bogenablage in einer Bogenbearbeitungsmaschine (01) mit zumindest einer Bogenablageeinrichtung (701) und mit zumindest einem unteren Nutzentrennwerkzeug (503), umfassend die Schritte Einfahren der zumindest einen Bogenablageeinrichtung (701) in einer Einfahrrichtung (E) von einer Einfahrposition (723) in eine Zwischenspeicherposition (724), Ausfahren der zumindest einen Bogenablageeinrichtung (701) von einer Zwischenspeicherposition (724) in eine Ausfahrposition (726) entgegen der Einfahrrichtung (E), wobei die zumindest eine Bogenablageeinrichtung (701) eine Ebene (E701) aufweist und in der vertikalen Richtung (V) zumindest in der Zwischenspeicherposition (724) unter einer Ebene (E503) des unteren Nutzentrennwerkzeuges (503) angeordnet ist, wobei die Ebene (E503) des unteren Nutzentrennwerkzeuges (503) unter aller die Aussparungen und/oder einen Raumbereich (506) der Einzelstapel (602) und/oder der Stapel im unteren Nutzentrennwerkzeug (503) begrenzenden Mitteln angeordnet ist,
**dadurch gekennzeichnet, dass** zur Erhöhung das Abstandes zwischen der Ebene (E701) der zumindest einen Bogenablageeinrichtung (701) und der Ebene (E503) des unteren Nutzentrennwerkzeugs (503) die zumindest eine Bogenablageeinrichtung (701) relativ zu dem zumindest einen unteren Nutzentrennwerkzeug (503) entgegen einer vertikalen Richtung (V) mittels einer Hubvorrichtung (720) verstellt wird und dass zur Erhöhung der Zwischenspeicherkapazität die zumindest eine Bogenablageeinrichtung (701) entgegen der vertikalen Richtung (V) von der Zwischenspeicherposition (724) mit einem ersten Abstand zwischen der Ebene (E503) des zumindest einen unteren Nutzentrennwerkzeugs (503) und der Ebene (E701) der zumindest einen Bogenablageeinrichtung (701) in eine weitere Zwischenspeicherposition mit einem vergrößerten Abstand zwischen der Ebene (E503) des zumindest einen unteren Nutzentrennwerkzeugs (503) und der Ebene (E701) der zumindest einen Bogenablageeinrichtung (701) verstellt wird.

12. Verfahren nach Anspruch 11, **dadurch gekennzeichnet, dass** die zumindest eine Bogenablageeinrichtung (701) den Raumbereich (506) des zumindest einen unteren Nutzentrennwerkzeuges (503) in vertikaler Richtung (V) nach unten begrenzt.

13. Verfahren nach Anspruch 11 oder 12, **dadurch gekennzeichnet, dass** zumindest ein Stapelelement (604) und/oder der zumindest eine Auslagestapel (601) an die zumindest eine Bogenablageeinrichtung (701) in vertikaler Richtung (V) mittels einer weiteren Hubvorrichtung (603) angepasst wird und dass der Abstand zwischen der zumindest einen Bogenablageeinrichtung (701) und dem zumindest einen Stapelelement (604) und/oder dem zumindest einen Auslagestapel (601) mittels zumindest eines Sensors erfasst wird und dass ein Abstand zwischen dem Auslagestapel (601) und/oder dem zumindest einen Stapelelement (604) und der zumindest einen Bogenablageeinrichtung (701) aufeinander angepasst werden.

14. Verfahren nach Anspruch 13, **dadurch gekennzeichnet, dass** zumindest ein weiterer Sensor den Füllstand des Raumbereichs (506) des unteren Nutzentrennwerkzeuges (503) erfassen kann und/oder erfasst.

15. Verfahren nach Anspruch 11 oder 12 oder 13 oder 14, **dadurch gekennzeichnet, dass** die zumindest eine Bogenablageeinrichtung (701) zumindest ein horizontal verstellbares Bogenablagemittel (705) und zumindest ein relativ zu dem zumindest einen Bogenablagemittel (705) verstellbares Ablageelement (703) umfasst.

## Claims

1. Sheet processing machine (01) comprising at least one pile formation device (701) and comprising at least one lower multiple-up separating tool (503), the at least one pile formation device (701) being arranged so as to be displaceable at least in an inward-moving direction (E), the at least one pile formation device (701) including a plane (E701), the at least one pile formation device (701) being arranged so as to be displaceable at least in a vertical direction (V) relative to the at least one lower multiple-up separating tool (503) by means of a lifting device (720), at least the plane (E701), in a temporary storage position (724), being arranged in a vertical direction (V) beneath a plane (E503) of the lower multiple-up separating tool (503), the plane (E503) of the lower multiple-up separating tool (503) being arranged beneath all the means that delimit the recesses and/or a spatial area (506) of the individual piles (602) and/or the piles in the lower multiple-up separating tool (503), and the plane (E701) of the at least one pile formation device (701), in the temporary storage position (724), having a first distance with respect to the plane (E503) of the lower multiple-up separating tool (503),
**characterized in that**
the at least one pile formation device (701) is arranged so as to be displaceable in the vertical direction (V) from a temporary storage position (724) to a further temporary storage position, and that, in the further temporary storage position, the plane (E701) of the at least one pile formation device (701) is arranged at an increased distance with respect to the plane (E503) of the lower multiple-up separating tool (503).

2. Sheet processing machine according to claim 1, **characterized in that** the at least one pile formation device (701) is arranged so as to be displaceable in the vertical direction (V) from the temporary storage position (724) into the further temporary storage position in order to increase the temporary storage capacity.

3. Sheet processing machine according to claim 1 or 2, **characterized in that** the at least one pile formation device (701) is arranged so as to downwardly delimit a spatial area (506) of the at least one lower multiple-up separating tool (503) in the vertical direction (V), and that the at least one pile formation device (701) comprises a sensor and/or a further sensor for detecting the fill level of the spatial area (506) of the lower multiple-up separating tool (503).

4. Sheet processing machine according to claim 1 or 2 or 3, **characterized in that** the position of the at least one pile formation device (701) in the vertical direction (V) is detectable by at least one sensor.

5. Sheet processing machine according to claim 1 or 2 or 3 or 4, **characterized in that** the at least one pile formation device (701) is arranged in a vertical direction (V) above at least one stacking element (604) and at least one delivery pile (601), and that the at least one stacking element (604) is arranged so as to be displaceable in the vertical direction (V) by a further lifting device (603), and that the at least one stacking element (604) is arranged so as to be displaceable in the vertical direction (V) as a function of the position of the at least one pile formation device (701).

6. Sheet processing machine according to claim 4 and 5, **characterized in that** a height of a pile (601) of the at least one stacking element (604) is detectable by at least one further sensor, and that the at least one stacking element (604) is arranged so as to be displaceable in a vertical direction (V) to the position of the at least one pile formation device (701).

7. Sheet processing machine according to claim 3 or 4 or 5 or 6, **characterized in that** the at least one pile formation device (701) is arranged so as to be displaceable in the vertical direction (V) as a function of a fill level of the spatial area (506) .

8. Sheet processing machine according to claim 1 or 2 or 3 or 4 or 5 or 6 or 7, **characterized in that** the at least one pile formation device (701) comprises a deposit element (703) that can be displaced relative to the at least one pile formation means (705).

9. Sheet processing machine according to claim 8, **characterized in that** the at least one deposit element (703) is configured as at least one at least partially linearly configured transport means (703), and that the at least one pile formation device (701) is arranged so as to be at least horizontally displaceable by means of a drive (706), and that the at least one at least partially linearly configured transport means (703) is arranged to be displaceable in relative terms by means of a further drive (704).

10. Sheet processing machine according to claim 8 or 9, **characterized in that** the at least one deposit element (703) and the at least one pile formation means (705) are driven by means of a coaxial shaft (731).

11. Method for forming piles in a sheet processing machine (01) comprising at least one pile formation device (701) and comprising at least one lower multiple-up separating tool (503), comprising the steps of inwardly moving the at least one pile formation device (701) in an inwardly-moving direction (E) from an inward-moving position (723) into a temporary storage position (724), outwardly moving the at least one pile formation device (701) from a temporary storage position (724) into an outwardly-moving position (726) counter to the inwardly-moving direction (E), the at least one pile formation device (701) including a plane (E701) and, at least in the temporary storage position (724), being arranged in the vertical direction (V) beneath a plane (E503) of the lower multiple-up separating tool (503), the plane (E503) of the lower multiple-up separating tool (503) being arranged beneath all the means that delimit the recesses and/or a spatial area (506) of the individual piles (602) and/or the piles in the lower multiple-up separating tool (503),
**characterized in that**
so as to increase the distance between the plane (E701) of the at least one pile formation device (701) and the plane (E503) of the lower multiple-up separating tool (503), the at least one pile formation device (701) is displaced relative to the at least one lower multiple-up separating tool (503) counter to a vertical direction (V) by means of a lifting device (720), and that, so as to increase the temporary storage capacity, the at least one pile formation device (701) is displaced counter to the vertical direction (V) from the temporary storage position (724) at a first distance between the plane (E503) of the at least one lower multiple-up separating tool (503) and the plane (E701) of the at least one pile formation device (701) into a further temporary storage position at an increased distance between the plane (E503) of the at least one lower multiple-up separating tool (503) and the plane (E701) of the at least one pile formation device (701).

12. Method according to claim 11, **characterized in that** the at least one pile formation device (701) downwardly delimits the spatial area (506) of the at least one lower multiple-up separating tool (503) in the vertical direction (V).

13. Method according to claim 11 or 12, **characterized in that** at least one stacking element (604) and/or the at least one delivery pile (601) are adapted to the at least one pile formation device (701) in the vertical direction (V) by means of a further lifting device (603), and that the distance between the at least one pile formation device (701) and the at least one stacking element (604) and/or the at least one delivery pile (601) is detected by means of at least one sensor, and that a distance between the delivery pile (601) and/or the at least one stacking element (604) and the at least one pile formation device (701) are adapted to one another.

14. Method according to claim 13, **characterized in that** at least one further sensor is able to detect and/or detects the fill level of the spatial area (506) of the lower multiple-up separating tool (503).

15. Method according to claim 11 or 12 or 13 or 14, **characterized in that** the at least one pile formation device (701) comprises at least one horizontally displaceable pile formation means (705) and at least one deposit element (703) that can be displaced relative to the at least one pile formation means (705).

## Revendications

1. Machine de traitement de feuilles (01) avec au moins un équipement de dépôt de feuilles (701) et avec au moins un outil de séparation de copies (503) inférieur, dans laquelle le au moins un équipement de dépôt de feuilles (701) est agencé de façon réglable dans au moins une direction d'entrée (E), dans laquelle le au moins un équipement de dépôt de feuilles (701) présente un plan (E701), dans laquelle le au moins un équipement de dépôt de feuilles (701) est agencé de façon réglable au moyen d'un dispositif de levage (720) dans une direction verticale (V) relativement au au moins un outil de séparation de copies (503) inférieur, dans laquelle au moins le plan (E701) est agencé dans une position de stockage intermédiaire (724) dans une direction verticale (V) sous un plan (E503) de l'outil de séparation de copies (503) inférieur, dans laquelle le plan (E503) de l'outil de séparation de copies (503) inférieur est agencé sous tous les moyens délimitant les évidements et/ou une région spatiale (506) des piles individuelles (602) et/ou des piles dans l'outil de séparation de copies (503) inférieur, et dans laquelle le plan (E701) du au moins un équipement de dépôt de feuilles (701) présente dans la position de stockage intermédiaire (724) une première distance jusqu'au plan (E503) de l'outil de séparation de copies (503) inférieur,
**caractérisée en ce que**
le au moins un équipement de dépôt de feuilles (701) est agencé de façon réglable dans la direction verticale (V) depuis une position de stockage intermédiaire (724) vers une autre position de stockage intermédiaire, et **en ce que** le plan (E701) du au moins un équipement de dépôt de feuilles (701) dans l'autre position de stockage intermédiaire est agencé avec une distance augmentée vers le plan (E503) de l'outil de séparation de copies (503) inférieur.

2. Machine de traitement de feuilles selon la revendication 1, **caractérisée en ce que** le au moins un équipement de dépôt de feuilles (701) est agencé de façon réglable dans la direction verticale (V) pour augmenter la capacité de stockage intermédiaire depuis la position de stockage intermédiaire (724) vers l'autre position de stockage intermédiaire.

3. Machine de traitement de feuilles selon la revendication 1 ou 2, **caractérisée en ce que** le au moins un équipement de dépôt de feuilles (701) est agencé de façon à délimiter vers le bas dans la direction verticale (V) une région spatiale (506) du au moins un outil de séparation de copies (503) inférieur et **en ce que** le au moins un équipement de dépôt de feuilles (701) présente un capteur et/ou un autre capteur pour saisir le niveau de remplissage de la région spatiale (506) de l'outil de séparation de copies (503) inférieur.

4. Machine de traitement de feuilles selon la revendication 1 ou 2 ou 3, **caractérisée en ce que** la position du au moins un équipement de dépôt de feuilles (701) peut être saisie dans la direction verticale (V) par au moins un capteur.

5. Machine de traitement de feuilles selon la revendication 1 ou 2 ou 3 ou 4, **caractérisée en ce que** le au moins un équipement de dépôt de feuilles (701) est agencé dans une direction verticale (V) par-dessus au moins un élément de pile (604) et au moins une pile de réception (601) et **en ce que** le au moins un élément de pile (604) est agencé de façon réglable dans la direction verticale (V) par un autre dispositif de levage (603) et **en ce que** le au moins un élément de pile (604) est agencé de façon réglable dans la direction verticale (V) en fonction de la position du au moins un équipement de dépôt de feuilles (701).

6. Machine de traitement de feuilles selon la revendication 4 et 5, **caractérisée en ce qu'**une hauteur d'une pile (601) du au moins un élément de pile (604) peut être saisie par au moins un autre capteur et **en ce que** le au moins un élément de pile (604) est agencé de façon réglable dans une direction verticale (V) sur la position du au moins un équipement de dépôt de feuilles (701).

7. Machine de traitement de feuilles selon la revendication 3 ou 4 ou 5 ou 6, **caractérisée en ce que** le au moins un équipement de dépôt de feuilles (701) est agencé de façon réglable dans la direction verticale (V) en fonction d'un niveau de remplissage de la région spatiale (506).

8. Machine de traitement de feuilles selon la revendication 1 ou 2 ou 3 ou 4 ou 5 ou 6 ou 7, **caractérisée en ce que** le au moins un équipement de dépôt de feuilles (701) comprend un élément de dépôt (703) réglable relativement au au moins un moyen de dépôt de feuilles (705).

9. Machine de traitement de feuilles selon la revendication 8, **caractérisée en ce que** le au moins un élément de dépôt (703) est conçu au moins en tant que moyen de transport (703) conçu partiellement en forme de droite et **en ce que** le au moins un équipement de dépôt de feuilles (701) est agencé de façon réglable au moins horizontalement au moyen d'un entraînement (706) et **en ce que** le au moins un moyen de transport (703) conçu partiellement en forme de droite est agencé de façon relativement réglable au moyen d'un autre entraînement (704).

10. Machine de traitement de feuilles selon la revendication 8 ou 9, **caractérisée en ce que** le au moins un élément de dépôt (703) et le au moins un moyen de dépôt de feuilles (705) sont entraînés au moyen d'un arbre coaxial (731) .

11. Procédé de dépôt de feuilles dans une machine de traitement de feuilles (01) avec au moins un équipement de dépôt de feuilles (701) et avec au moins un outil de séparation de copies (503) inférieur, comprenant les étapes d'entrée du au moins un équipement de dépôt de feuilles (701) dans une direction d'entrée (E) depuis une position d'entrée (723) vers une position de stockage intermédiaire (724), de sortie du au moins un équipement de dépôt de feuilles (701) depuis une position de stockage intermédiaire (724) vers une position de sortie (726) à l'encontre de la direction d'entrée (E), dans lequel le au moins un équipement de dépôt de feuilles (701) présente un plan (E701) et est agencé dans la direction verticale (V) et au moins dans la position de stockage intermédiaire (724) sous un plan (E503) de l'outil de séparation de copies (503) inférieur, dans lequel le plan (E503) de l'outil de séparation de copies (503) inférieur est agencé sous tous les moyens délimitant les évidements et/ou une région spatiale (506) des piles individuelles (602) et/ou des piles dans l'outil de séparation de copies (503) inférieur,
**caractérisé en ce que**
pour augmenter la distance entre le plan (E701) du au moins un équipement de dépôt de feuilles (701) et le plan (E503) de l'outil de séparation de copies (503) inférieur, le au moins un équipement de dépôt de feuilles (701) est réglé à l'encontre d'une direction verticale (V) relativement au au moins un outil de séparation de copies (503) inférieur au moyen d'un dispositif de levage (720) et **en ce que**, pour augmenter la capacité de stockage intermédiaire, le au moins un équipement de dépôt de feuilles (701) est réglé à l'encontre de la direction verticale (V) depuis la position de stockage intermédiaire (724) avec une première distance entre le plan (E503) du au moins un outil de séparation de copies (503) inférieur et le plan (E701) du au moins un équipement de dépôt de feuilles (701) dans une autre position de stockage intermédiaire avec une distance augmentée entre le plan (E503) du au moins un outil de séparation de copies (503) inférieur et le plan (E701) du au moins un équipement de dépôt de feuilles (701).

12. Procédé selon la revendication 11, **caractérisé en ce que** le au moins un équipement de dépôt de feuilles (701) délimite vers le bas dans la direction verticale (V) la région spatiale (506) du au moins un outil de séparation de copies (503) inférieur.

13. Procédé selon la revendication 11 ou 12, **caractérisé en ce qu'**au moins un élément de pile (604) et/ou la au moins une pile de réception (601) sont ajustés dans la direction verticale (V) au au moins un équipement de dépôt de feuilles (701) au moyen d'un autre dispositif de levage (603) et **en ce que** la distance entre le au moins un équipement de dépôt de feuilles (701) et le au moins un élément de pile (604) et/ou la au moins une pile de réception (601) est saisie au moyen d'au moins un capteur et **en ce qu'**une distance entre la pile de réception (601) et/ou le au moins un élément de pile (604) et le au moins un équipement de dépôt de feuilles (701) sont ajustées l'une à l'autre.

14. Procédé selon la revendication 13, **caractérisé en ce qu'**au moins un autre capteur peut saisir et/ou saisit le niveau de remplissage de la région spatiale (506) de l'outil de séparation de copies (503) inférieur.

15. Procédé selon la revendication 11 ou 12 ou 13 ou 14, **caractérisé en ce que** le au moins un équipement de dépôt de feuilles (701) comprend au moins un moyen de dépôt de feuilles (705) horizontalement réglable et au moins un élément de dépôt (703) réglable relativement au au moins un moyen de dépôt de feuilles (705).
